# EUROPEAN PATENT APPLICATION

(11) **EP 4 852 124 A1**
(43) Date of publication of application: **09.12.2026**
(21) Application number: 26182677.0
(22) Date of filing: 02.06.2026
(51) Int. Cl.: H01M 10/0567, H01M 10/42, H01M 10/054, H01M 10/0568, H01M 10/0569

(54) **ELECTROLYTE SOLUTION FOR ENERGY STORAGE DEVICE**

(30) Priority: 04.06.2025 US 202519227952
(71) Applicant: Tesla, Inc., Austin, TX 78725 (US)
(72) Inventor: DAHN, Jeffery Raymond, Austin, 78725 (US); HY, Sunny, Austin, 78725 (US)
(74) Representative: Cousens, Nico

(57) **Abstract**

Various aspects disclosed relate to an electrolyte solution for an energy storage device.

## Description

### BACKGROUND

Energy storage devices, such as sodium-ion batteries, can play an important role in various applications including electric vehicles and portable electronics. The performance of these devices can be heavily influenced by the composition of their electrolyte solutions. Conventional electrolyte solutions can face challenges in achieving fast charging capabilities while maintaining long-term stability and safety.

### SUMMARY

The present disclosure provides electrolyte solutions for energy storage devices as well as methods of making and using the electrolyte solutions and devices incorporating the electrolyte solutions.

### BRIEF DESCRIPTION OF THE DRAWINGS

The drawings illustrate generally, by way of example, but not by way of limitation, various aspects of the present disclosure.
FIG. 1 shows a side cross-sectional schematic view of an example of an energy storage device.
FIG. 2 is a high-level diagram of an example vehicle.
FIG. 3 is a series of graphs showing gas formation, charge transfer resistance (Ret) and first cycle efficiency (FCE) of sodium-ion batteries having additive components described herein.
FIG. 4 is a series of plots showing discharge capacity, normalized capacity, and voltage hysteresis (ΔV) of sodium-ion batteries including 1,3-dioxolane-2,2-dithione (DTD) additive components cycled at 40°C between 1.5 and 3.9V.
FIG. 5 is a series of plots showing discharge capacity, normalized capacity, and voltage hysteresis (ΔV) of sodium-ion batteries including additive components described herein cycled at 55°C.
FIG. 6 is a plot showing results of open circuit voltage (OCV) storage tests conducted at 55°C with 3.9V as the top of charge (TOC).
FIG. 7 is a series of graphs showing gas formation, charge transfer resistance (Rct), and first cycle efficiency (FCE) of sodium-ion batteries having a 1,2,6-oxadithiane 2,2,6,6-tetraoxide (ODTO) additive component.
FIG. 8 is a series of plots showing discharge capacity, normalized capacity, and voltage hysteresis (ΔV) of sodium-ion batteries including additive components described herein cycled at 40°C.
FIG. 9 is a series of plots showing discharge capacity, normalized capacity, and voltage hysteresis (ΔV) of sodium-ion batteries including additive components described herein cycled at 55°C.
FIG. 10 is a series of plots showing discharge capacity, normalized capacity, and voltage hysteresis (ΔV) of sodium-ion batteries including additive components described herein cycled at 55°C.
FIG. 11 is a series of plots showing discharge capacity, normalized capacity, and voltage hysteresis (ΔV) of sodium-ion batteries including additive components described herein cycled at 40°C.
FIG. 12 is a series of plots showing discharge capacity, normalized capacity, and voltage hysteresis (ΔV) of sodium-ion batteries including additive components described herein cycled at 55°C.
FIG. 13 is a series of plots showing discharge capacity, normalized capacity, and voltage hysteresis (ΔV) of sodium-ion batteries including additive components described herein.
FIG. 14 is a graph showing voltage discharge of sodium-ion batteries including additive components described herein.
FIG. 15 is a graph showing gas volume generation of sodium-ion batteries including additive components described herein.
FIG. 16 is a series of plots showing discharge capacity, capacity, voltage hysteresis (ΔV), and zeroed charge slippage of sodium-ion batteries including additive components described herein.

### DETAILED DESCRIPTION

Reference will now be made in detail to certain aspects of the disclosed subject matter, examples of which are illustrated in part in the accompanying drawings. While the disclosed subject matter will be described in conjunction with the enumerated claims, it will be understood that the exemplified subject matter is not intended to limit the claims to the disclosed subject matter.

Various aspects according to the instant disclosure are directed towards an electrolyte solution that can be used in an energy storage device such as a battery (e.g., a sodium-ion battery). The electrolyte solution includes a solvent component, an additive component, and an alkali salt.

As described further herein, the disclosed additive components provide several advantages for sodium-ion energy storage devices. The additives, particularly those with structures according to Formulas I and II (shown hereinbelow) and their derivatives, can enhance performance characteristics of sodium-ion energy storage device (e.g., batteries). Experimental data demonstrates that these additives can contribute to reduced gas formation during battery operation, which can be beneficial for battery safety and longevity. Some compositions show improved charge transfer resistance compared to base electrolytes, potentially enabling faster charging capabilities. The additives can also contribute to higher first cycle efficiency, which can maximize the usable energy capacity of the battery.

Certain additive components exhibit enhanced capacity retention during cycling at various temperatures, including at elevated temperatures of 40°C and 55°C, suggesting improved thermal stability. For example, some compositions demonstrated better performance with lower impedance growth during extended cycling tests. The additives can also help minimize self-discharge during storage, as evidenced by open circuit voltage tests conducted at elevated temperatures. Additionally, some compositions show reduced voltage hysteresis during cycling, which can improve energy efficiency of the battery system.

The additive components can be tailored by adjusting the substituents (R groups) or by using mixtures of different additives to optimize performance for specific applications or operating conditions. This versatility allows for customization of electrolyte solutions for various use cases, from portable electronics to electric vehicles and grid energy storage applications. The additives can function effectively with different sodium salts, including sodium hexafluorophosphate (NaPF₆) and sodium bis(fluorosulfonyl)imide (NaFSI), providing flexibility in electrolyte formulation.

In the electrolyte solution, the solvent component can range from about 70 wt% to about 95 wt% of the total electrolyte mass, about 75 wt% to about 85 wt%, less than, equal to, or greater than about 75 wt%, 76, 77, 78, 79, 80, 81, 82, 83, 84, 85, 86, 87, 88, 89, 90, 91, 92, 93, 94, or about 95 wt% of the total electrolyte mass. The solvent component can include a linear ester, a cyclic organic carbonate, a linear organic carbonate, a linear ether, a cyclic ether, a sulfite, a phosphate or a mixture of at least two thereof. Examples of linear esters can include methyl acetate, ethyl acetate, and methyl propionate. Examples of cyclic organic carbonates can include ethylene carbonate and propylene carbonate, fluoroethylene carbonate, di-fluoroethylene carbonate, and vinylene carbonate. Examples of linear organic carbonates can include dimethyl carbonate, methyl ethyl carbonate, and diethyl carbonate. Examples of linear ethers can include monoglyme or diglyme. An example of a cyclic ether can include a tetrhydrofuran. An example of a sulfite can include a dimethyl sulfite. Examples of phosphates can include a trimethyl phosphate or a triethyl phosphate.

If present, the linear ester can range from 0.01 wt% to about 100 wt% of the solvent component, about 5 wt% to about 70 wt%, about 5 wt% to about 50 wt%, about 8 wt% to about 30 wt%, less than, equal to, or greater than about 0 wt%, 5, 10, 15, 20, 25, 30, 35, 40, 45, 50, 55, 60, 65, 70, 75, 80, 85, 90, 95, or about 100 wt%. If present, the cyclic organic carbonate can range from about 0.01 wt% to about 100 wt% of the solvent component, about 5 wt% to about 40 wt%, about 5 wt% to about 25 wt%, less than, equal to, or greater than about 0 wt%, 5, 10, 15, 20, 25, 30, 35, 40, 45, 50, 55, 60, 65, 70, 75, 80, 85, 90, 95, or about 100 wt%. If present, the linear organic carbonate can range from about 0.01 wt% to about 100 wt% of the solvent component, about 2 wt% to about 95 wt%, about 5 wt% to about 60 wt%, less than, equal to, or greater than about 0 wt%, 5, 10, 15, 20, 25, 30, 35, 40, 45, 50, 55, 60, 65, 70, 75, 80, 85, 90, 95, or about 100 wt%.

The alkali salt can include a sodium salt. Examples of suitable alkali salts can include sodium hexafluorophosphate (NaPF₆), sodium bis(fluorosulfonyl)imide (NaFSI), sodium bis(trifluoromethylsulfonyl)imide (NaTFSI) sodium difluoro(oxalato)borate (NaDFOB), sodium bis(oxalato)borate (NaBOB), sodium tetrafluoroborate (NaBF4), or a mixture of at least two thereof. In some examples, these alkali salts may include a lithium salt, potassium salt, or both mixed therewith. The total alkali salt concentration in the electrolyte solution can range from about 0.5m to about 1.8m, about 0.8m to about 1.4m, less than, equal to, or greater than about 0.5m, 0.6, 0.7, 0.8, 0.9, 1, 1.1, 1.2, 1.3, 1.4, 1.5, 1.6, 1.7, or about 1.8.

The additive component can range from about 0.01 wt% to about 10 wt% of the electrolyte solution, about 0.5 wt% to about 2 wt%, less than, equal to, or greater than about 0.01 wt%, 0.05, 0.10, 0.15, 0.20, 0.25, 0.30, 0.35, 0.40, 0.45, 0.50, 0.55, 0.60, 0.65, 0.70, 0.75, 0.80, 0.85, 0.90, 0.95, 1, 1.05, 1.10, 1.15, 1.20, 1.25, 1.30, 1.35, 1.40, 1.45, 1.50, 1.55, 1.60, 1.65, 1.70, 1.75, 1.80, 1.85, 1.90, 1.95, 2, 2.05, 2.10, 2.15, 2.20, 2.25, 2.30, 2.35, 2.40, 2.45, 2.50, 2.55, 2.60, 2.65, 2.70, 2.75, 2.80, 2.85, 2.90, 2.95, 3 3.05, 3.10, 3.15, 3.20, 3.25, 3.30, 3.35, 3.40, 3.45, 3.50, 3.55, 3.60, 3.65, 3.70, 3.75, 3.80, 3.85, 3.90, 3.95, 4, 4.05, 4.10, 4.15, 4.20, 4.25, 4.30, 4.35, 4.40, 4.45, 4.50, 4.55, 4.60, 4.65, 4.70, 4.75, 4.80, 4.85, 4.90, 4.95, 5, 5.05, 5.10, 5.15, 5.20, 5.25, 5.30, 5.35, 5.40, 5.45, 5.50, 5.55, 5.60, 5.65, 5.70, 5.75, 5.80, 5.85, 5.90, 5.95, 6, 6.05, 6.10, 6.15, 6.20, 6.25, 6.30, 6.35, 6.40, 6.45, 6.50, 6.55, 6.60, 6.65, 6.70, 6.75, 6.80, 6.85, 6.90, 6.95, 7, 7.05, 7.10, 7.15, 7.20, 7.25, 7.30, 7.35, 7.40, 7.45, 7.50, 7.55, 7.60, 7.65, 7.70, 7.75, 7.80, 7.85, 7.90, 7.95, 8, 8.05, 8.10, 8.15, 8.20, 8.25, 8.30, 8.35, 8.40, 8.45, 8.50, 8.55, 8.60, 8.65, 8.70, 8.75, 8.80, 8.85, 8.90, 8.95, 9, 9.05, 9.10, 9.15, 9.20, 9.25, 9.30, 9.35, 9.40, 9.45, 9.50, 9.55, 9.60, 9.65, 9.70, 9.75, 9.80, 9.85, 9.90, 9.95, or about 10 wt%.

The additive component can include a compound having a structure according to Formula I or Formula II, an enantiomer thereof, a diastereomer thereof, a *meso* compound thereof, a constitutional isomer thereof, or a mixture thereof: 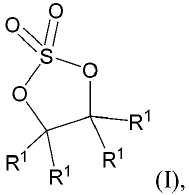 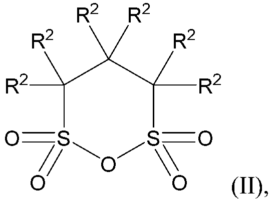 At each occurrence, R¹-R² are independently H, a halogen, substituted or unsubstituted C₁-C₂₀ hydrocarbyl, or substituted or unsubstituted C₁-C₂₀ haloalkyl. In some examples, at least one of or each of R¹-R⁸ is H. In some examples at least one of, or each of, R¹-R² is a halogen. In some examples, the halogen is F. The additive component comprises the structure according to Formula III, Formula IV, Formula V, an enantiomer thereof, a diastereomer thereof, a *meso* compound thereof, a constitutional isomer thereof, or a mixture thereof: 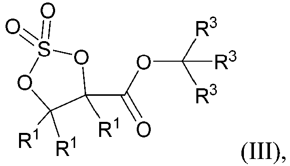 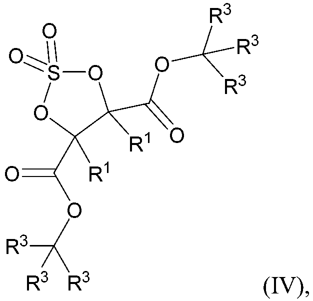 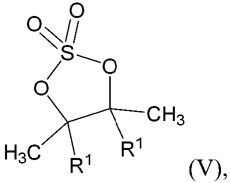 wherein at each occurrence R³ is independently selected from -H, a halogen, a substituted or an unsubstituted C₁-C₂₀ hydrocarbyl, or substituted or unsubstituted C₁-C₂₀ haloalkyl.

In some examples, at least one of, or each of, R¹-R³ is substituted or unsubstituted C₁-C₂₀ alkyl. In some examples, at least one of, or each of, R¹-R³ is substituted or unsubstituted C₁-C₂₀ aryl. In some examples, at least one of, or each of R¹-R³ is substituted or unsubstituted C₁-C₂₀ haloalkyl. In some examples, at least one of, or each or, R¹-R³ is substituted or unsubstituted C₁-C₂₀ fluoroalkyl.

Specific examples of the additives can include the structure according to Formula VI, Formula VII, Formula VIII, Formula IX, or a mixture thereof:

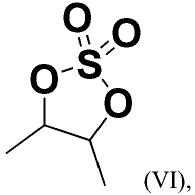

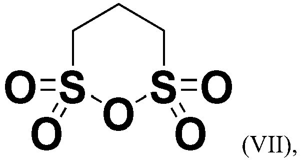

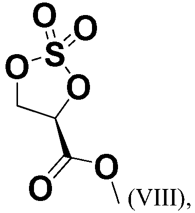

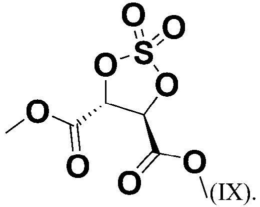

The additive component can include any one of the aforementioned structures. Additionally, the additive component can include a mixture of at least two of the aforementioned structures, at least three of the aforementioned structures, or other plural number. In examples where the additive component is a mixture of the aforementioned structures, each structure can individually account for about 0.05 wt% to about 99 wt% of the additive component, about 5 wt% to about 80 wt%, about 10 wt% to about 60 wt%, less than, equal to, or greater than about 0.05 wt%, 0.5, 1, 5, 10, 15, 20, 25, 30, 35, 40, 45, 50, 55, 60, 65, 70, 75, 80, 85, 90, 95, or about 99 wt%.

In some examples, the additives having the structure of Formula I and Formula II, as well as the derivatives thereof, can be present as a mixture of additives. The mixture of Formulas I and II can be in ranges from 5:1 to 1:5, about 4:1 to about 1:4, about 3:1 to about 1:3.

Additional additives that can be included as a mixture with any of the aforementioned additives include Vinylene carbonate, Vinyl ethylene carbonate, Fluoroethylene carbonate, 1,3,2-Dioxathiolane 2,2-Dioxide, 1-Propene 1,3-Sultone, 1,3 Propanesultone, Sodium difluorophosphate, Sodium tetrafluoroborate, Sodium bisoxalatodifluorophosphate, Sodium tetrafluoro(oxalato)phosphate, Tris(trimethylsilyl) Phosphate, Tris(trimethylsilyl) phosphite, or a mixture of at least two thereof.

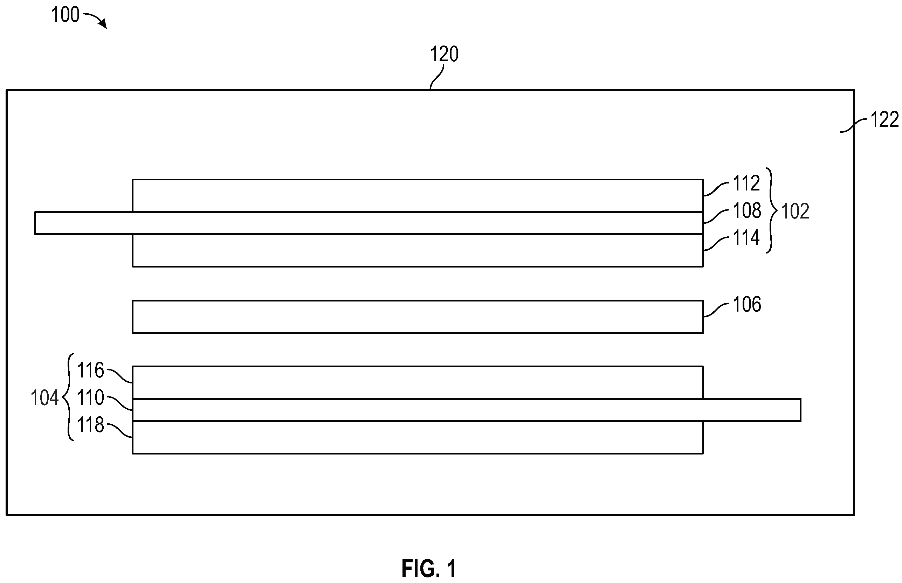

FIG. 1 shows a side cross-sectional schematic view of an example of an energy storage device 100 to which the aforementioned electrolyte solution can be incorporated. The energy storage device 100 may be a sodium-ion battery. It should be realized that other energy storage devices are within the scope of the disclosure, and can include batteries, capacitor-battery hybrids, and/or fuel cells. The energy storage device 100 can have a first electrode 102, a second electrode 104, and a separator 106 positioned between the first electrode 102 and second electrode 104. For example, the first electrode 102 and the second electrode 104 may be placed adjacent to respective opposing surfaces of the separator 106. The first electrode 102 may comprise a cathode and the second electrode 104 may comprise an anode, or vice versa. The energy storage device 100 includes the aforementioned electrolyte solution 122 to facilitate ionic communication between the electrodes 102, 104 of the energy storage device 100. For example, the electrolyte solution 122 may be in contact with the first electrode 102, the second electrode 104, and the separator 106.

The electrolyte solution 122, the first electrode 102, the second electrode 104, and the separator 106 may be received within an energy storage device housing 120. For example, the energy storage device housing 120 may be sealed subsequent to insertion of the first electrode 102, the second electrode 104, and the separator 106, and the energy storage device 100 may be impregnated with the electrolyte solution 122 such that the first electrode 102, the second electrode 104, the separator 106, and the electrolyte solution 122 may be physically sealed from an environment external to the housing 120. The electrolyte solution 122 optionally includes one or more additives as provided herein.

The separator 106 can be configured to electrically insulate two electrodes adjacent to opposing sides of the separator 106, such as the first electrode 102 and the second electrode 104, while permitting ionic communication between the two adjacent electrodes. The separator 106 can comprise a variety of porous electrically insulating materials. In some aspects, the separator 106 can include a polymeric material, a glass fiber, a ceramic-coated polymer, or a combination of at least two thereof. For example, the separator 106 can include polyethylene (PE), polypropylene (PP), polyethylene-polypropylene multi-layer (PP/PE/PP), polyvinylidene fluoride (PVDF), anodized alumina (AAO), polyethylene oxide (PEO), polyvinyl alcohol (PVA), β"-alumina, Na₃Zr₂Si₂PO₁₂ (NASICON), and zeolite A.

As shown in FIG. 1, the first electrode 102 and the second electrode 104 include a first current collector 108 and a second current collector 110, respectively. The first current collector 108 and the second current collector 110 may facilitate electrical coupling between the corresponding electrode and an external circuit (not shown). The first current collector 108 and/or the second current collector 110 can include one or more electrically conductive materials, and/or have various shapes and/or sizes configured to facilitate transfer of electrical charges between the corresponding electrode and a terminal for coupling the energy storage device 100 with an external terminal, including an external electrical circuit. For example, a current collector can include a metallic material, such as a material comprising aluminum, nickel, copper, silver, alloys thereof, and/or the like. For example, the first current collector 108 and/or the second current collector 110 can comprise an aluminum foil having a rectangular or substantially rectangular shape and can be dimensioned to provide desired transfer of electrical charges between the corresponding electrode and an external electrical circuit (e.g., via a current collector plate and/or another energy storage device component configured to provide electrical communication between the electrodes and the external electrical circuit).

The first electrode 102 may have a first electrode film 112 (e.g., an upper electrode film) on a first surface of the first current collector 108 (e.g., on a top surface of the first current collector 108) and a second electrode film 114 (e.g., a lower electrode film) on a second opposing surface of the first current collector 108 (e.g., on a bottom surface of the first current collector 108). Similarly, the second electrode 104 may have a first electrode film 116 (e.g., an upper electrode film) on a first surface of the second current collector 110 (e.g., on a top surface of the second current collector 110), and a second electrode film 118 on a second opposing surface of the second current collector 110 (e.g., on a bottom surface of the second current collector 110). For example, the first surface of the second current collector 110 may face the second surface of the first current collector 108, such that the separator 106 is adjacent to the second electrode film 114 of the first electrode 102 and the first electrode film 116 of the second electrode 104.

The electrode films 112, 114, 116 and/or 118 can have a variety of suitable shapes, sizes, and/or thicknesses. For example, the electrode films 112, 114, 116 and/or 118 can have a thickness of about 30 microns (µm) to about 250 microns, including about 100 microns to about 250 microns. It will be understood that aspects described herein can be implemented with one or more electrodes, and with electrode(s) that have one or more electrode films, and should not be limited to the aspect shown in FIG. 1.

In some aspects, an electrode film of an anode and/or a cathode of a sodium-ion cell comprises a mixture comprising binder material and carbon. Examples of suitable cathode materials can include sodium iron oxide (NaFeO₂); sodium cobalt oxide (NaCoO₂); sodium vanadium phosphate (Na₃V₂(PO₄)₃); sodium iron phosphate (NaFePO₄); or sodium manganese oxide (NaMnO₂), Na(Ni_{1/3}Fe_{1/3}Mn_{1/3})O₂ and related layered oxides, Na₄Fe₃(P₂O₇)₃(NFPP), NaCrO2, or the like. Examples of suitable anode materials include ; sodium (metal form), hard carbon; sodium titanate, , a sodium and tin alloy, a lead and sodium alloy, or an antimony and sodium alloy. Some examples may be anode-free in that they simply include an aluminum foil with sodium plated thereon from the cathode..

In some aspects, the electrode film of an anode and/or a cathode can include one or more additives, including conductive additives. In some aspects, the binder material can include one or more fibrillizable binder components. For example, a process for forming an electrode film can include fibrillizing the fibrillizable binder component such that the electrode film comprises fibrillized binder. The binder component may be fibrillized to provide a plurality of fibrils, the fibrils providing desired mechanical support for one or more other components of the film. For example, a matrix, lattice and/or web of fibrils can be formed to provide desired mechanical structure for the electrode film. For example, a cathode and/or an anode of a sodium-ion capacitor can include one or more electrode films comprising one or more fibrillized binder components. In some aspects, a binder component can include one or more of a variety of suitable fibrillizable polymeric materials, such as polytetrafluoroethylene (PTFE), ultra-high molecular weight polyethylene (UHMWPE), and/or other suitable fibrillizable materials, used alone or in combination.

In some aspects, the electrode film of a sodium-ion capacitor cathode can comprise an electrode film mixture comprising one or more carbon based electroactive components, including for example a porous carbon material, such as activated carbon. In some aspects, the electrode film of a sodium-ion capacitor anode comprises an electrode film mixture comprising carbon configured to reversibly intercalate sodium-ions. In some aspects, the sodium intercalating carbon is graphite. In some aspects, the electrode film of the cathode and/or anode can include an electrical conductivity promoting additive, for example, comprising carbon black.

In some aspects, an energy storage device, such as the device 100, can be fabricated by a method comprising providing a cathode and providing an anode, such as the electrodes 102, 104; placing a separator, such as the separator 106, between the cathode and the anode; inserting the cathode, the anode, and the separator into a housing, such as the housing 120, adding the electrolyte solution 122 to the housing, and contacting the electrolyte with the cathode and the anode.

The energy storage device 100 including the aforementioned electrolyte solution 122 can be incorporated in portable applications, vehicles, domestic buildings, commercial building, or grid energy storage. Examples of vehicles include a car, passenger vehicle, truck, bus, shuttle, motorcycle, scooter, utility vehicle, construction vehicle, mining vehicle, agricultural vehicle, aircraft, plane, helicopter, vertical takeoff and landing (eVTOL) vehicle, drone, unmanned aerial vehicle (UAV), airship, space vehicle, boat, ship, ferry, personal watercraft, submersible, marine vessel, port vehicle, train, tram, light rail vehicle, or subway car.

An operating temperature of the energy storage device can be in a range of from about -40 to about 90 °C, about -30 to about 75 °C, less than, equal to, or greater than about -40 °C, -35, -30, -25, -20, -15, -10, -5, 0, 5, 10, 15, 20, 25, 30, 35, 40, 45, 50, 55, 60, 65, 70, 75, 80, 85, or about 95 °C.

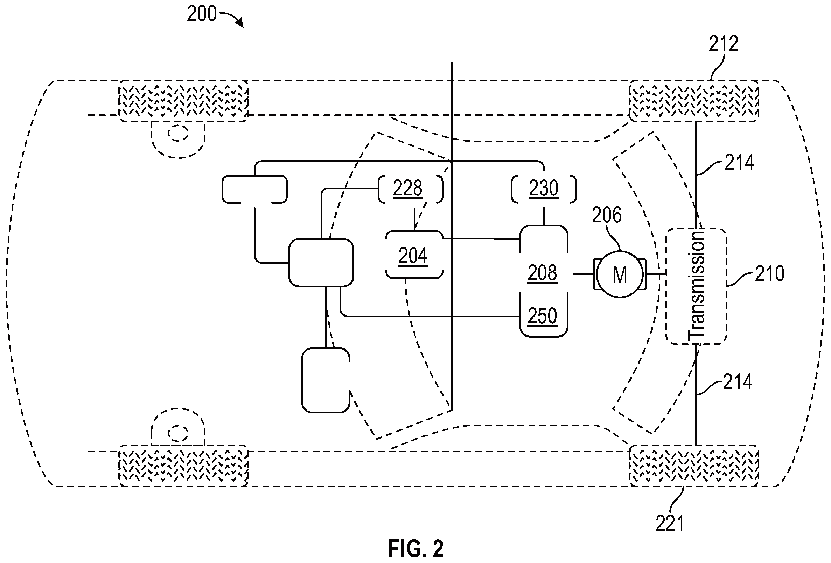

FIG. 2 is a high-level diagram of a vehicle 200 that can include the energy storage device 100. In various aspects, the vehicle 200 is an electric vehicle and includes a vehicle propulsion energy storage device 204, including the aforementioned electrolyte solution 122, and at least one propulsion motor 206 for converting battery energy into mechanical motion, such as rotary motion. The present subject matter includes examples in which the energy storage device 204 is a subcomponent of an energy storage system (ESS). An ESS includes various components associated with transmitting energy to and from the energy storage device 204 in various examples, including safety components, cooling components, heating components, rectifiers, etc.

A state of charge circuit 228 is pictured to monitor the state of charge of the energy storage device 204. The state of charge circuit 228 can count coulombs, watt-hours, or provide other measure of how much energy is in the energy storage device 204 . In some aspects, the state of charge is determined by measuring the battery voltage either open circuited or driving a known load. In additional aspects, the state of charge circuit could optionally provide additional battery information, such as temperature, rate of energy use, number of charge/discharge cycles, and other information relating to battery state. The state of charge circuit 228 can be integrated into an ESS.

Additionally illustrated is an energy converter 208. The energy converter 208 is part of a system that converts energy from the vehicle propulsion energy storage device 204 into energy useable by the at least one propulsion motor 206. In certain instances, the energy flow is from the at least one propulsion motor 206 to the energy storage device 204. As such, in some examples, the energy storage device 204 transmits energy to the energy converter 208, which converts the energy into energy usable by the at least one propulsion motor 206 to propel the electric vehicle. In additional examples, the at least one propulsion motor 206 generates energy that is transmitted to the energy converter 208. In these examples, the energy converter 208 converts the energy into energy that can be stored in the energy storage device 204 .

Some examples of the energy converter 208 include one or more field effect transistors. Some examples include metal oxide semiconductor field effect transistors. Some examples include one more insulated gate bipolar transistors. As such, in various examples, the energy converter 208 includes a switch bank which is configured to receive a direct current ("DC") power signal from the energy storage device 204 and to output a three-phase alternating current ("AC") signal to power the vehicle propulsion motor 206. In some examples, the energy converter 208 is configured to convert a three-phase signal from the vehicle propulsion motor 206 to DC power to be stored in the energy storage device 204 . Some examples of the energy converter 208 convert energy from the energy storage device 204 into energy usable by electrical loads other than the vehicle propulsion motor 206. Some of these examples switch energy from approximately 390 volts DC to 14 volts DC.

The propulsion motor 206 is, in some aspects, a three-phase alternating current (AC) propulsion motor, in various examples. Some examples include a plurality of such motors. The present subject matter can optionally include a transmission or gearbox 210 in certain examples. While some examples include a 1-speed transmission, other examples are contemplated. Manually clutched transmissions are contemplated, as are those with hydraulic, electric, or electrohydraulic clutch actuation. Some examples employ a dual-clutch system that, during shifting, phases from one clutch coupled to a first gear to another coupled to a second gear. Rotary motion is transmitted from the transmission 210 to wheels 212 and 221 via one or more axles 214, in various examples.

A fuel burning engine 230 is pictured though not a required component (e.g., for a fully electric vehicle). The fuel burning engine 230 can burn any of a variety of fuels, such as fossil fuels, synthetics, and biofuels. The fuel burning engine 230 can be controlled to provide a continuous level of power or can provide a variable level of power via control such as throttle control, as is known. Some aspects operate the fuel burning engine 230 at a level that provides for the highest fuel efficiency.

The fuel burning engine 230 is shown connected to the energy converter 208, such that the fuel burning engine 230 could turn a generator to which it is coupled and provide power to the energy converter 208, but other configurations are possible. For example, in some aspects, an integrated engine generator provides power directly to the energy storage device 204 .

The engine can run constantly, but various examples turn the engine on or off based on energy requirements of the vehicle 200. External power is provided to communicate energy with the energy storage device 204, with a reduced overall charging time as discussed above. In various aspects, external power includes a charging station that is coupled to a municipal power grid. In certain examples, the charging station converts power from a 110V AC power source into power storable by the energy storage device 204 . In additional examples, the charging station converts power from a 120V AC power source into power storable by the energy storage device 204. Some aspects include converting energy from the energy storage device 204 into power usable by a municipal grid. The present subject matter is not limited to examples in which a converter for converting energy from an external source to energy usable by the vehicle 200 is located outside the vehicle 200, and other examples are contemplated.

### Examples

Various aspects of the present disclosure can be better understood by reference to the following Examples, which are offered by way of illustration. The present disclosure is not limited to the Examples given herein.

### Example 1: Comparative Performance of DTD and DTD Derivatives in Sodium-Ion Cells

A series of experiments were conducted to evaluate the performance of 1,3-dioxolane-2,2-dithione (DTD) and several DTD derivatives as electrolyte additives in sodium-ion battery cells. The base electrolyte used was 1M NaFSI in PC:EMC (15:85). The DTD derivatives tested included DTD-mono-COOMe, DTD-di-COOMe, and DTD-di-Me, where COOMe represents a carboxy methyl group.

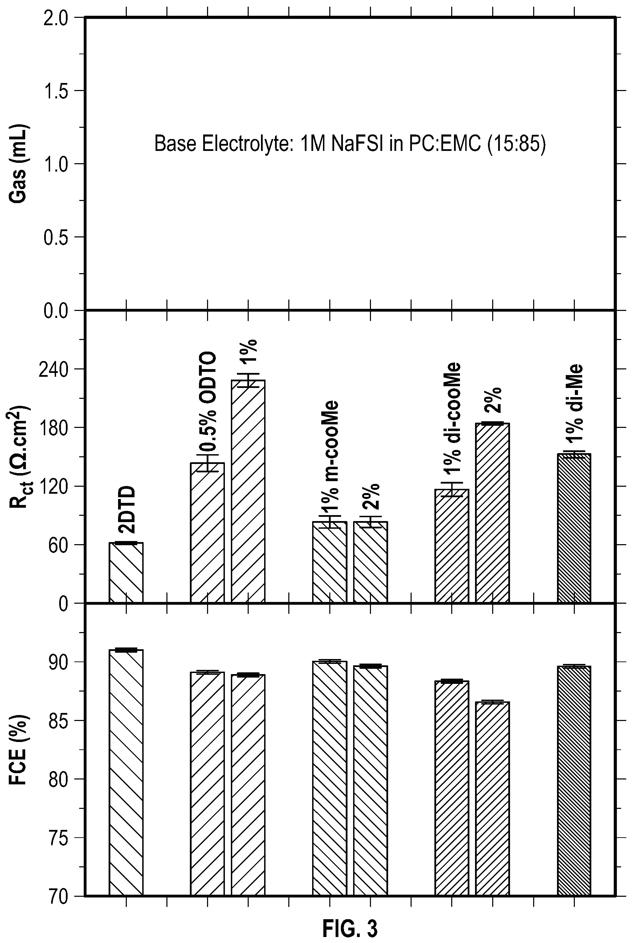

FIG. 3 is a series of graphs showing gas formation, charge transfer resistance (Rct), and first cycle efficiency (FCE) of sodium-ion batteries having the additive components. Formation was conducted at 40°C with one C20C20 cycle between 1.5 and 3.9V. None of the DTD derivatives generated gas during formation. The 2% DTD showed the lowest charge transfer resistance, while all other derivatives showed higher Rct than 2% DTD. DTD exhibited the highest first cycle efficiency, with higher additive percentages leading to lower first cycle efficiency.

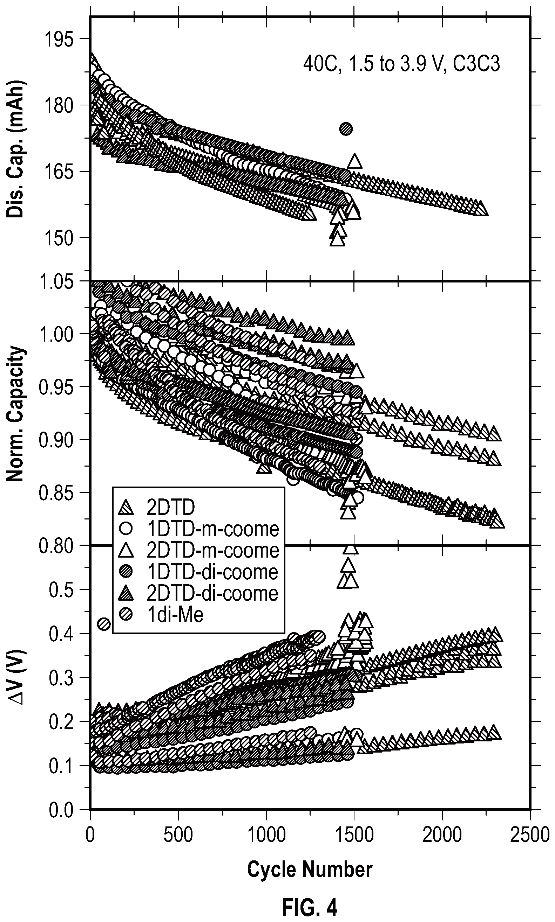

FIG. 4 is a series of plots showing discharge capacity, normalized capacity, and voltage hysteresis (ΔV) of sodium-ion batteries. DTD additive components cycled at 40°C between 1.5 and 3.9V at C3C3 rates revealed that higher percentages of DTD-derivatives resulted in lower absolute discharge capacity, correlating with FCE from formation data. DTD-mono-COOMe showed worse capacity retention and higher impedance growth than DTD, especially at 1% concentration. In contrast, DTD-di-COOMe demonstrated better capacity retention and lower impedance growth than DTD, particularly at 2% concentration. DTD-di-Me exhibited significantly worse performance than any of the other additives tested. All additives showed no gas generation except for 1% DTD-mono-COOMe.

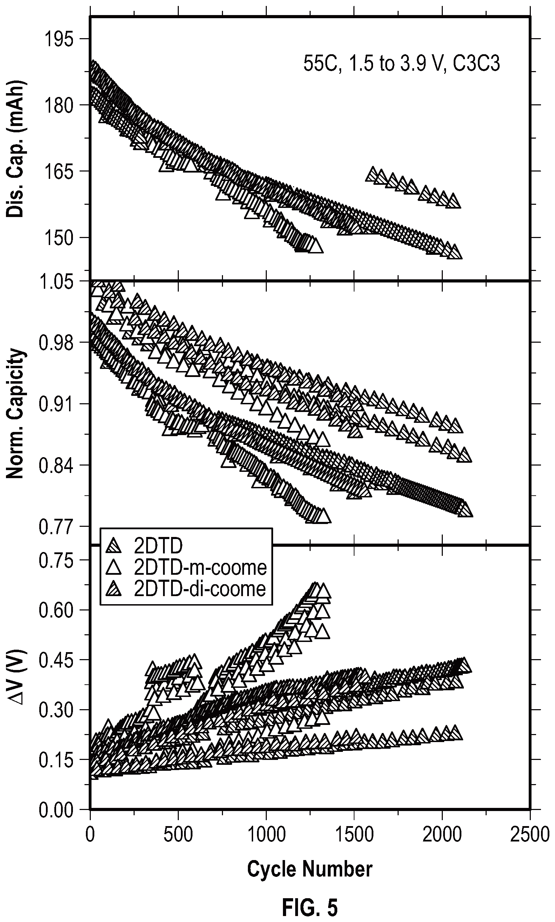

FIG. 5 is a series of plots showing discharge capacity, normalized capacity, and voltage hysteresis (ΔV) of sodium-ion batteries including DTD additive components cycled at 55°C. Cycling between 1.5 and 3.9V at C3C3 rates showed that the difference in absolute discharge capacity between additives was diminished. Although 2% DTD-di-COOMe performed better than 2% DTD at 40°C, DTD-di-COOMe's capacity retention was worse at 55°C with more gas generation. The 2% DTD-mono-COOMe performed significantly worse than 2% DTD. The 2% DTD reached end-of-life (80% capacity) at 55°C after approximately 2100 cycles with around 4-5 mL of gas.

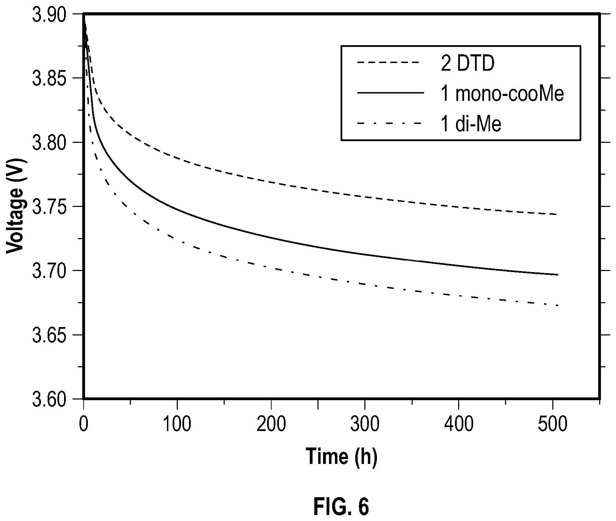

FIG. 6 is a plot showing the results of open circuit voltage (OCV) storage tests conducted at 55°C with 3.9V as the top of charge (TOC). As shown, DTD-di-Me had the worst performance in terms of self-discharge and gassing. The 2% DTD exhibited almost no gas after 500-hour TOC OCV storage at 55°C and demonstrated the least self-discharge.

### Example 2: Performance of 1,2, 6-oxadithiane 2,2,6,6-tetraoxide (ODTO) in Sodium-Ion Cells

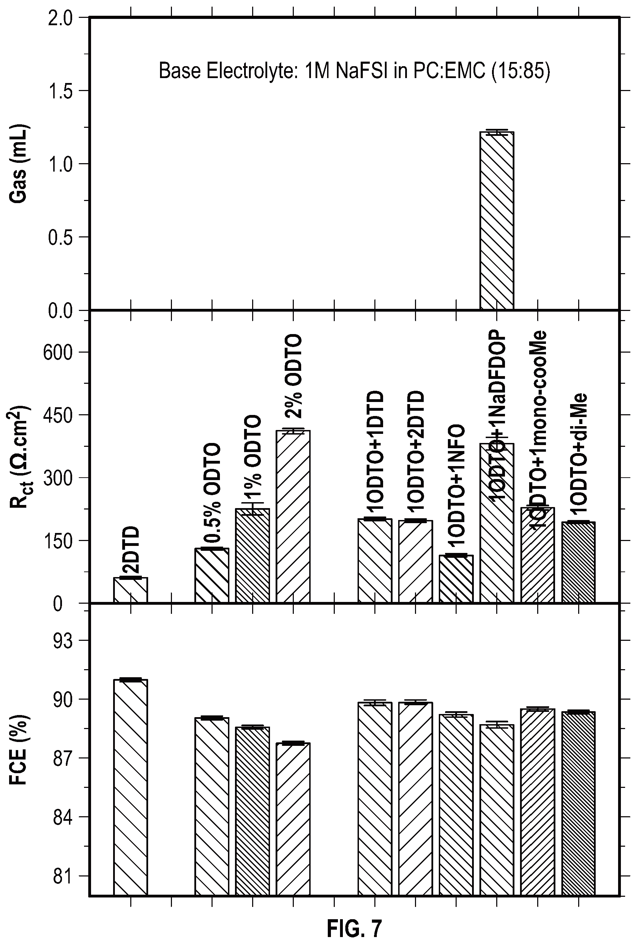

FIG. 7 is a series of graphs showing gas formation, charge transfer resistance (Rct), and first cycle efficiency (FCE) of sodium-ion batteries having a 1,2,6-oxadithiane 2,2,6,6-tetraoxide (ODTO) additive component. ODTO was evaluated as an electrolyte additive for sodium-ion cells, both alone and in combination with other additives. Formation was conducted at 40°C between 1.5 and 3.9V with 1 C20C20 cycle. No formation gas was observed for all formulations. Only DTD and sodium difluorophosphate (NFO) lowered the Rct when mixed with 1% ODTO. Most blends improved FCE slightly compared to 1% ODTO alone, but all showed lower FCE than 2% DTD. Higher percentages of ODTO resulted in higher Rct and lower FCE. In FIG. 7 NaDFDOP is sodium difluoro(dioxalato) phosphate.

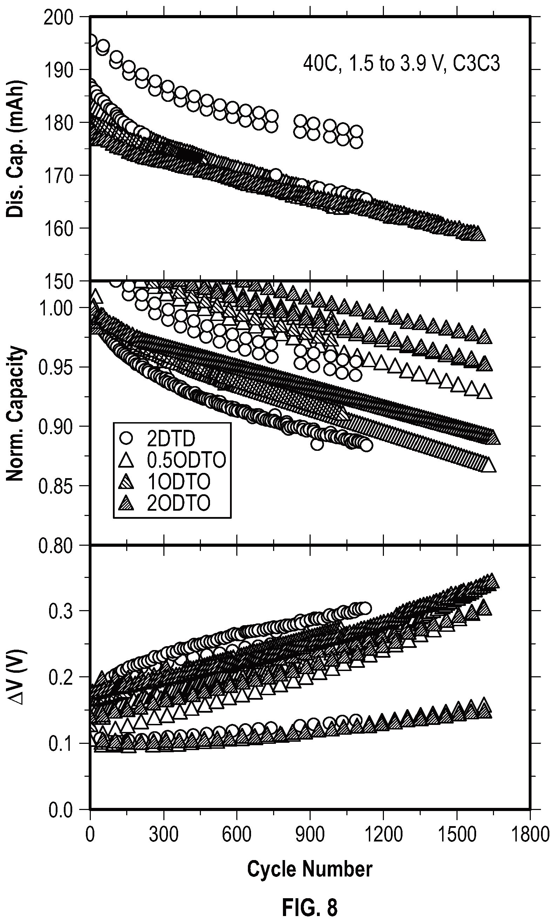

FIG. 8 is a series of plots showing discharge capacity, normalized capacity, and voltage hysteresis (ΔV) of sodium-ion batteries including DTD additive components cycled at 40°C. Cycling tests included comparing ODTO and DTD at an upper cut-off voltage (UCV) of 3.9V showed that at 40°C, higher percentages of ODTO resulted in lower absolute discharge capacity but improved capacity retention. The 1% ODTO demonstrated better capacity retention than 2% DTD at 40°C with lower impedance growth.

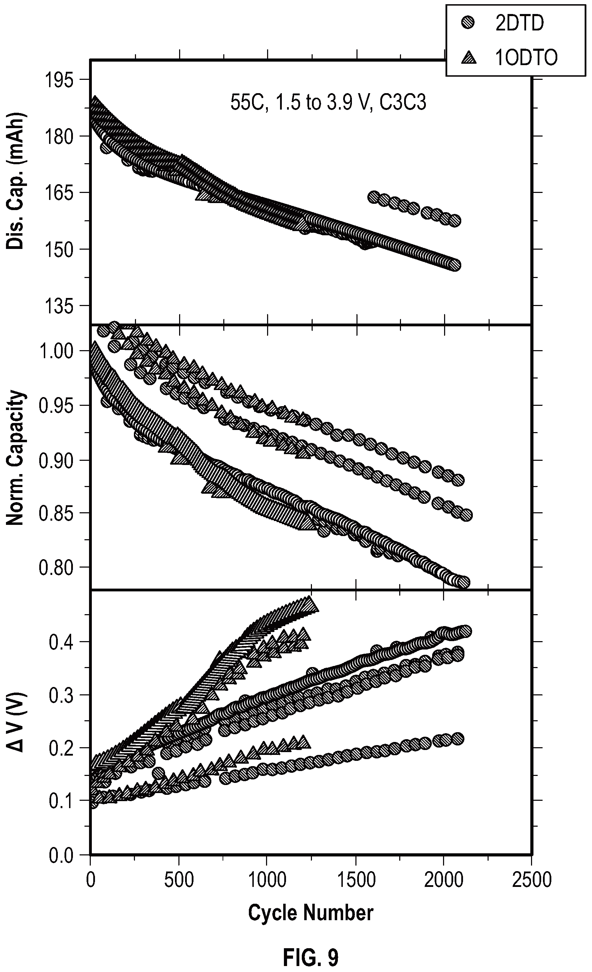

FIG. 9 is a series of plots showing discharge capacity, normalized capacity, and voltage hysteresis (ΔV) of sodium-ion batteries including DTD additive components cycled at 55°C. ODTO appeared less thermally stable, fading faster than DTD with more gas generation.

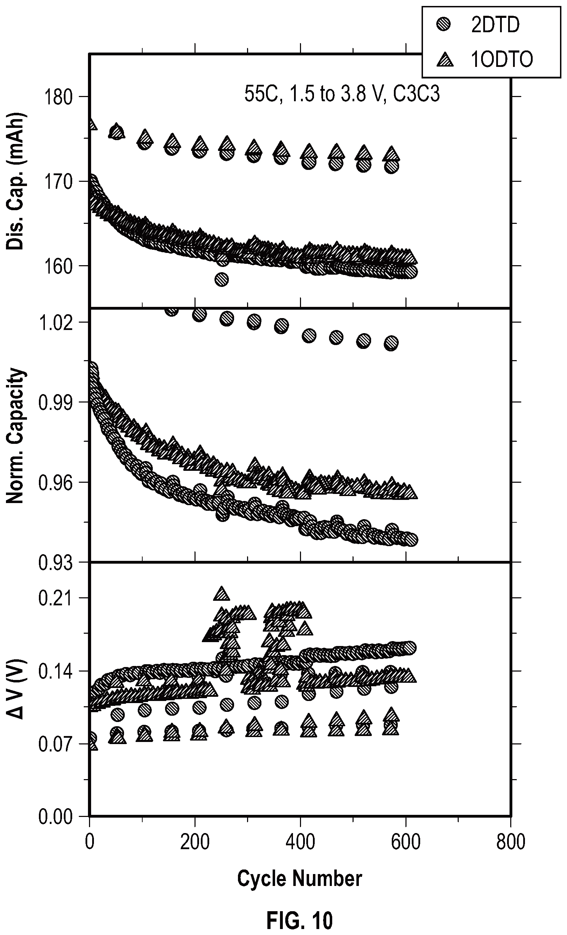

FIG. 10 is a series of plots showing discharge capacity, normalized capacity, and voltage hysteresis (ΔV) of sodium-ion batteries including DTD additive components cycled at 55°C. When the upper cut-off voltage was limited to 3.8V, 1% ODTO showed advantages over 2% DTD at 55°C, exhibiting 3% more capacity retention with lower impedance growth. No gas generation was observed after 600 cycles.

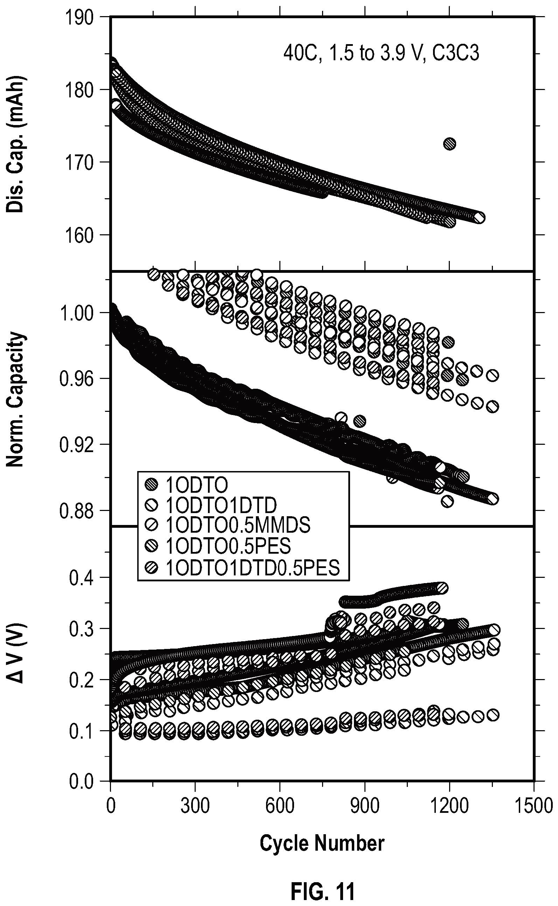

FIG. 11 is a series of plots showing discharge capacity, normalized capacity, and voltage hysteresis (ΔV) of sodium-ion batteries including DTD additive components cycled at 40°C showing the performance of ODTO in combination with various co-additives. At 40°C, most co-additives did not show significant advantages over 1% ODTO alone, and all formulations showed no gas generation after 1200 cycles.

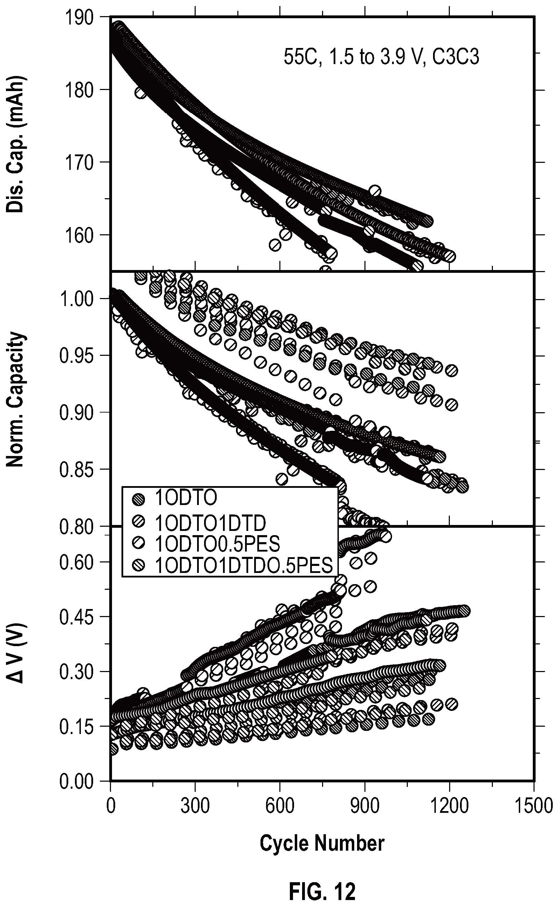

FIG. 12 is a series of plots showing discharge capacity, normalized capacity, and voltage hysteresis (ΔV) of sodium-ion batteries including DTD additive components cycled at 55°C. At 55°C, co-additives such as DTD or DTD with PES improved capacity retention, lowered impedance growth, and suppressed gas generation.

### Example 3: Comparison of NaPF₆ vs NaFSI with DTD or ODTO

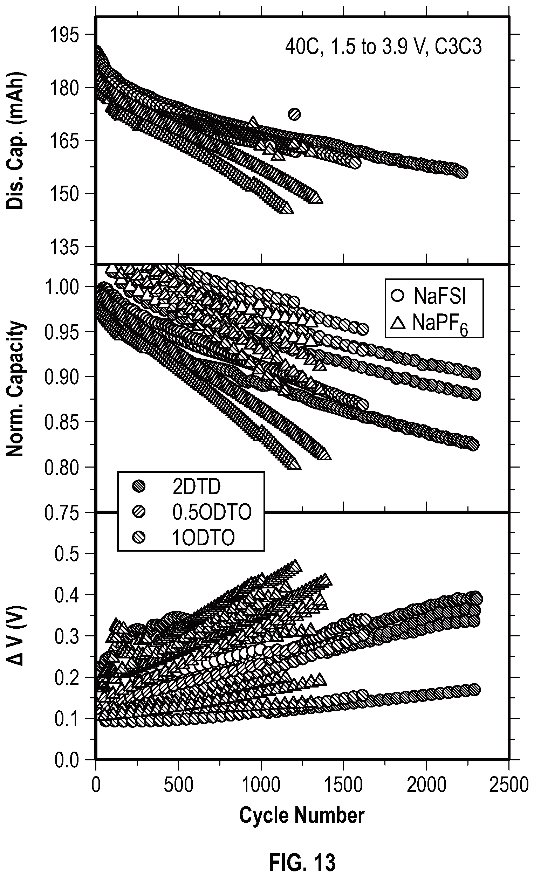

Experiments were conducted to compare the performance of different sodium salts (NaPF₆ and NaFSI) with DTD or ODTO additives at 40°C between 1.5 and 3.9V at C3C3 rates. FIG. 13 is a series of plots showing discharge capacity, normalized capacity, and voltage hysteresis (ΔV) of sodium-ion batteries including DTD and NaPF₆ and/or NaFSI additive components cycled at 40°C. NaPF₆ with 2% DTD showed slightly worse capacity retention than with Naits NaFSI counterpart but with more gas generation. NaPF₆ with ODTO led to rollover failure and significantly greater impedance growth compared to NaFSI with ODTO.

### Example 4: OCV-Storage and Gas Evolution

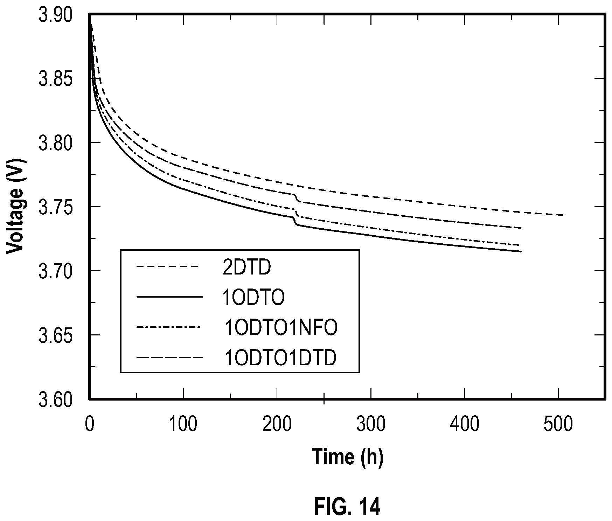

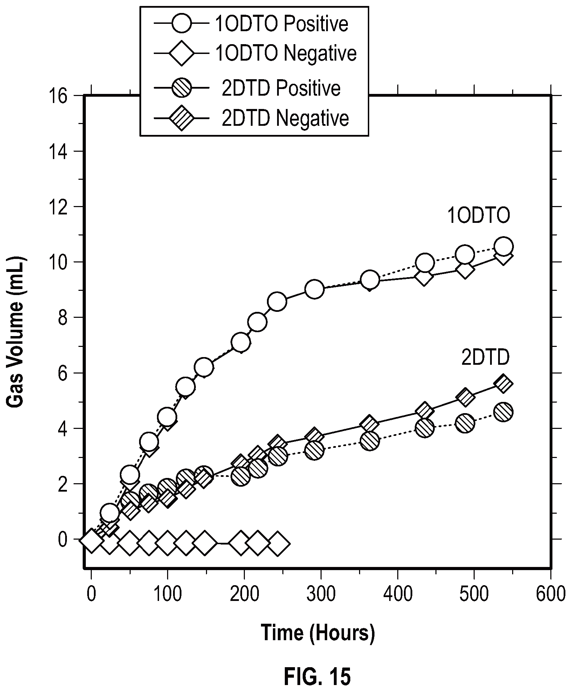

OCV-storage and gas bag experiments were conducted at 55°C with 3.9V as TOC. FIG. 14 is a graph showing voltage discharge of sodium-ion batteries including DTD additive components. FIG. 15 is a graph showing gas volume generation of sodium-ion batteries including DTD additive components. The 2% DTD showed the least self-discharge and gas generation, while 1% ODTO experienced the most self-discharge and gas generation. All formulations showed a reduction in Rct after the storage test. Gas bag experiments revealed that 2% DTD was more effective than 1% ODTO at suppressing cathode gas, although the rate of gas evolution did not slow down.

### Example 5: Ultra-High Precision Cycling (UHPC)

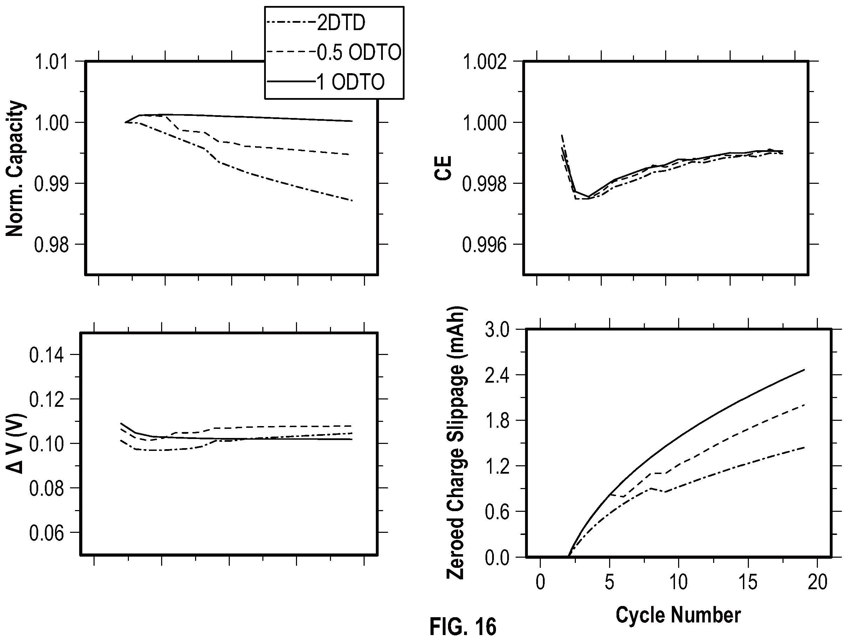

FIG. 16 is a series of plots showing discharge capacity, capacity, voltage hysteresis (ΔV), and zeroed charge slippage of sodium-ion batteries including DTD and ODTO additive components. UHPC tests revealed that 2% DTD showed the worst capacity retention but lowest charge slippage. ODTO exhibited higher charge slippage than DTD and its derivatives while maintaining high retention, suggesting oxidation reactions occurring on the cathode side, which was consistent with more cathode gas observed in pouch bag experiments.

### Exemplary Aspects.

The following exemplary aspects are provided, the numbering of which is not to be construed as designating levels of importance:
Aspect 1 provides an additive component for a sodium ion battery, the additive component comprising a structure according to Formula I or Formula II, an enantiomer thereof, a diastereomer thereof, a *meso* compound thereof, a constitutional isomer thereof, or a mixture thereof: 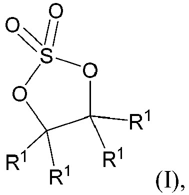 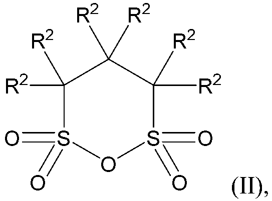 wherein at each occurrence R¹ and R² are independently selected from -H, a halogen, a substituted or an unsubstituted C₁-C₂₀ hydrocarbyl, or substituted or unsubstituted C₁-C₂₀ haloalkyl.

Aspect 2 provides the additive component of Aspect 1, wherein the additive component comprises the structure according to Formula III, Formula IV, Formula V, an enantiomer thereof, a diastereomer thereof, a *meso* compound thereof, a constitutional isomer thereof, or a mixture thereof: 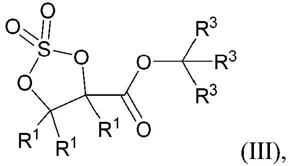 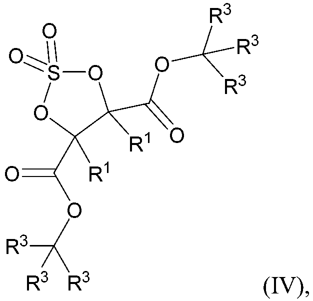 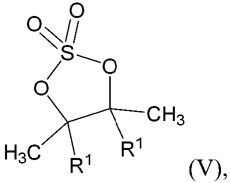 wherein at each occurrence R³ is independently selected from -H, a halogen, a substituted or an unsubstituted C₁-C₂₀ hydrocarbyl, or substituted or unsubstituted C₁-C₂₀ haloalkyl.

Aspect 3 provides the additive component of Aspect 2, wherein at least one of R¹-R³ is -H.

Aspect 4 provides the additive component of any of Aspects 2 or 3, wherein at least one of R¹-R³ is a halogen.

Aspect 5 provides the additive component of any of Aspect 4, wherein the halogen is -F.

Aspect 6 provides the additive component of any of Aspects 2-5, wherein at least one of R¹-R³ is substituted or unsubstituted C₁-C₂₀ alkyl.

Aspect 7 provides the additive component of any of Aspects 2-6, wherein at least one of R¹-R³ is substituted or unsubstituted C₁-C₂₀ aryl.

Aspect 8 provides the additive component of any of Aspects 2-7, wherein at least one of R¹-R³ are substituted or unsubstituted C₁-C₂₀ haloalkyl.

Aspect 9 provides the additive component of Aspect 8, wherein at least one of R¹-R³ are substituted or unsubstituted C₁-C₂₀ fluoroalkyl.

Aspect 10 provides the additive component of any of Aspects 1-9, wherein the additive component comprises the structure according to Formula VI, Formula VII, Formula VIII, Formula IX, or a mixture thereof:

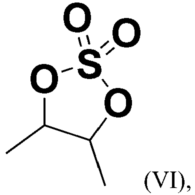

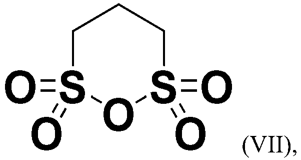

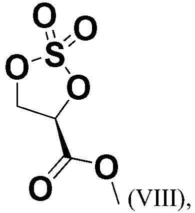

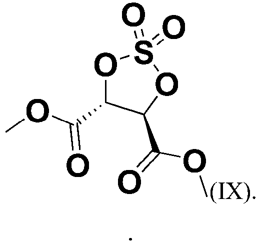

Aspect 11 provides the additive component of any of Aspects 1-10, comprising a mixture of Formulas I and II in a molar ratio ranging from about 5:1 to about 1:5.

Aspect 12 provides the additive component of any of Aspects 1-11, wherein a molar ratio of the mixture of Formula I to Formula II ranges from about 4:1 to about 1:4.

Aspect 13 provides the additive component of any of Aspects 1-12, wherein a molar ratio of the mixture of Formula I to Formula II ranges from about 3:1 to about 1:3.

Aspect 14 provides an electrolyte solution comprising:
a solvent comprising:
   at least one of:
      a linear ester;
      a cyclic organic carbonate;
      a linear organic carbonate;
      a linear ether;
      a cyclic ether;
      a sulfite; and
      a phosphate;
   an alkali salt, and
   an additive component comprising a structure according to Formula I or Formula II, an enantiomer thereof, a diastereomer thereof, a *meso* compound thereof, a constitutional isomer thereof, or a mixture thereof: 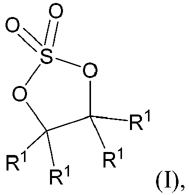 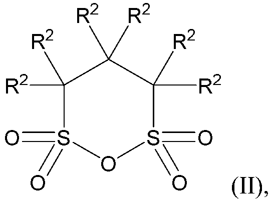
wherein at each occurrence R¹ and R² are independently selected from -H, a halogen, a substituted or an unsubstituted C₁-C₂₀ hydrocarbyl, or substituted or unsubstituted C₁-C₂₀ haloalkyl.

Aspect 15 provides the electrolyte solution of Aspect 14, wherein the additive component comprises the structure according to Formula III, Formula IV, Formula V, an enantiomer thereof, a diastereomer thereof, a *meso* compound thereof, a constitutional isomer thereof, or a mixture thereof: 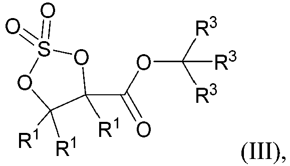 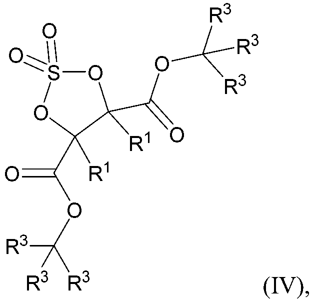 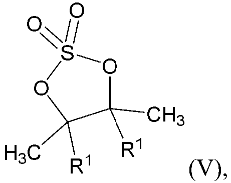 wherein at each occurrence R³ is independently selected from -H, a halogen, a substituted or an unsubstituted C₁-C₂₀ hydrocarbyl, or substituted or unsubstituted C₁-C₂₀ haloalkyl.

Aspect 16 provides the electrolyte solution of Aspect 15, wherein at least one of R¹-R³ is -H.

Aspect 17 provides the electrolyte solution of any of Aspects 15 or 16, wherein at least one of R¹-R³ is a halogen.

Aspect 18 provides the electrolyte solution of Aspect 17, wherein the halogen is -F.

Aspect 19 provides the electrolyte solution of any of Aspects 15-18, wherein at least one of R¹-R³ is substituted or unsubstituted C₁-C₂₀ alkyl.

Aspect 20 provides the electrolyte solution of any of Aspects 15-19, wherein at least one of R¹-R³ is substituted or unsubstituted C₁-C₂₀ aryl.

Aspect 21 provides the electrolyte solution of any of Aspects 15-20, wherein at least one of R¹-R³ are substituted or unsubstituted C₁-C₂₀ haloalkyl.

Aspect 22 provides the electrolyte solution of Aspect 21, wherein at least one of R¹-R³ are substituted or unsubstituted C₁-C₂₀ fluoroalkyl.

Aspect 23 provides the electrolyte solution of any of Aspects 14-22, wherein the additive component comprises the structure according to Formula VI, Formula VII, Formula VIII, Formula IX, or a mixture thereof:

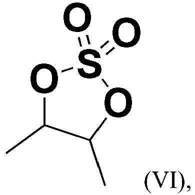

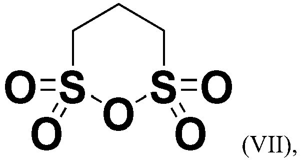

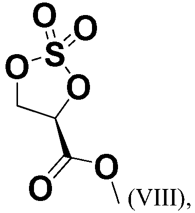

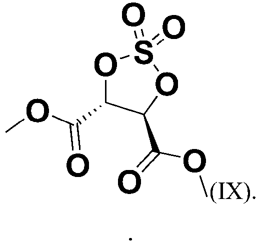

Aspect 24 provides the electrolyte solution of any of Aspects 14-23, wherein the alkali salt comprises sodium hexafluorophosphate (NaPF₆), sodium bis(fluorosulfonyl)imide (NaFSI), sodium bis(trifluoromethylsulfonyl)imide (NaTFSI), sodium difluoro(oxalato)borate (NaDFOB), sodium bis(oxalato)borate (NaBOB), sodium tetrafluoroborate (NaBF4), or a mixture thereof.

Aspect 25 provides the electrolyte solution of any of Aspects 14-24, wherein a linear ester concentration is in a range of from about 0 wt% to about 70 wt% of the solvent.

Aspect 26 provides the electrolyte solution of Aspect 25, wherein the linear ester concentration is in a range of from about 5 wt% to about 50 wt% of the solvent.

Aspect 27 provides the electrolyte solution of Aspect 26, wherein the linear ester concentration is in a range of from about 8 wt% to about 30 wt% of the solvent.

Aspect 28 provides the electrolyte solution of any of Aspects 14-27, wherein a cyclic organic carbonate concentration ranges from about 0 wt% to about 40 wt% of the solvent.

Aspect 29 provides the electrolyte solution of Aspect 28, wherein the cyclic organic carbonate concentration ranges from about 5 wt% to about 25 wt% of the solvent.

Aspect 30 provides the electrolyte solution of any of Aspects 14-29, wherein a linear organic carbonate concentration ranges from 0 wt% to about 95 wt% of the solvent.

Aspect 31 provides the electrolyte solution of Aspect 30, wherein the linear organic carbonate concentration ranges from about 5 wt% to about 60 wt% of the solvent.

Aspect 32 provides the electrolyte solution of any of Aspects 14-31, wherein an additive component concentration ranges from about 0.01 wt% to about 5 wt% of the electrolyte solution.

Aspect 33 provides the electrolyte solution of Aspect 32, wherein the additive component concentration ranges from about 0.5 wt% to about 2 wt% of the electrolyte solution.

Aspect 34 provides the electrolyte solution of any of Aspects 14-33, wherein a total alkali salt concentration is in a range of from about 0.5m to about 1.8m.

Aspect 35 provides the electrolyte solution of Aspect 34, wherein the total alkali salt concentration is in a range of from 0.8m to about 1.4m

Aspect 36 provides the electrolyte solution of any of Aspects 14-35 wherein the solvent comprises:
methyl acetate;
ethylene carbonate; and
dimethyl carbonate.

Aspect 37 provides the electrolyte solution of any of Aspects 14-36, wherein at least one of:
the linear ester is selected from a group comprising methyl acetate, ethyl acetate, and methyl propionate;
the cyclic organic carbonate is selected from a group comprising ethylene carbonate and propylene carbonate, fluoroethylene carbonate, di-fluoroethylene carbonate, and vinylene carbonate; and
the linear organic carbonate is selected from a group comprising dimethyl carbonate, methyl ethyl carbonate, and diethyl carbonate.

Aspect 38 provides the electrolyte solution of any of Aspects 14-37, comprising a mixture of Formulas I and II.

Aspect 39 provides the electrolyte solution of any of Aspects 14-38, wherein a molar ratio of the mixture of Formula I to Formula II ranges from about 5:1 to about 1:5.

Aspect 40 provides the electrolyte solution of any of Aspects 14-39, wherein a molar ratio of the mixture of Formula I to Formula II ranges from about 3:1 to about 1:3.

Aspect 41 provides an energy storage device comprising:
a cathode;
an anode;
a separator between the cathode and the anode; and
an electrolyte solution comprising:
   a solvent comprising:
      at least one of:
      a linear ester;
      a cyclic organic carbonate;
      a linear organic carbonate;
      a linear ether;
      a cyclic ether;
      a sulfite; and
      a phosphate;
   an alkali salt, and
   an additive component comprising a structure according to Formula I or Formula II, an enantiomer thereof, a diastereomer thereof, a *meso* compound thereof, a constitutional isomer thereof, or a mixture thereof: 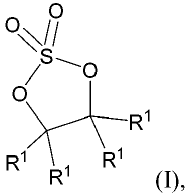 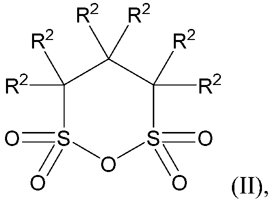
wherein at each occurrence R¹ and R² are independently selected from -H, a halogen, a substituted or an unsubstituted C₁-C₂₀ hydrocarbyl, or substituted or unsubstituted C₁-C₂₀ haloalkyl.

Aspect 42 provides the energy storage device of Aspect 41, wherein the additive component comprises the structure according to Formula III, Formula IV, Formula V, an enantiomer thereof, a diastereomer thereof, a *meso* compound thereof, a constitutional isomer thereof, or a mixture thereof: 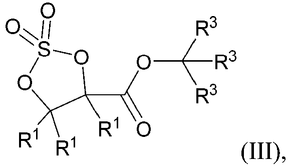 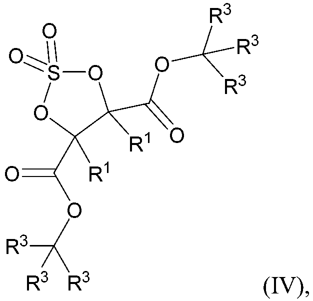 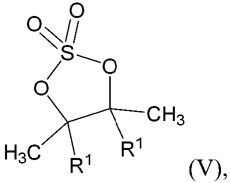 wherein at each occurrence R³ is independently selected from -H, a halogen, a substituted or an unsubstituted C₁-C₂₀ hydrocarbyl, or substituted or unsubstituted C₁-C₂₀ haloalkyl.

Aspect 43 provides the energy storage device of Aspect 42, wherein at least one of R¹-R³ is -H.

Aspect 44 provides the energy storage device of any of Aspects 42 or 43, wherein at least one of R¹-R³ is a halogen.

Aspect 45 provides the energy storage device of Aspect 44, wherein the halogen is -F.

Aspect 46 provides the energy storage device of any of Aspects 42-45, wherein at least one of R¹-R³ is substituted or unsubstituted C₁-C₂₀ alkyl.

Aspect 47 provides the energy storage device of any of Aspects 42-46, wherein at least one of R¹-R³ is substituted or unsubstituted C₁-C₂₀ aryl.

Aspect 48 provides the energy storage device of Aspect 42-47, wherein at least one of R¹-R³ are substituted or unsubstituted C₁-C₂₀ haloalkyl.

Aspect 49 provides the energy storage device of Aspect 48, wherein at least one of R¹-R³ are substituted or unsubstituted C₁-C₂₀ fluoroalkyl.

Aspect 50 provides the energy storage device of any of Aspects 41-49, wherein the additive component comprises the structure according to Formula VI, Formula VII, Formula VIII, Formula IX, or a mixture thereof:

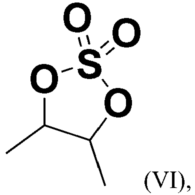

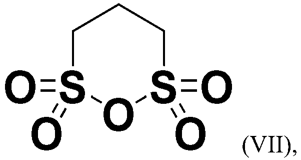

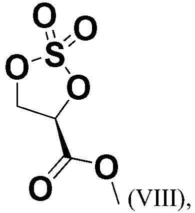

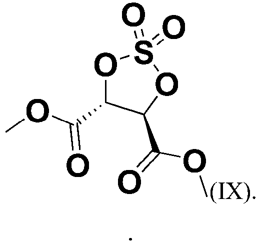

Aspect 51 provides the energy storage device of any of Aspects 41-50, wherein the alkali salt comprises sodium hexafluorophosphate (NaPF₆), sodium bis(fluorosulfonyl)imide (NaFSI), sodium bis(trifluoromethylsulfonyl)imide (NaTFSI), sodium difluoro(oxalato)borate (NaDFOB), sodium bis(oxalato)borate (NaBOB), sodium tetrafluoroborate (NaBF4),or a mixture thereof.

Aspect 52 provides the energy storage device of any of Aspects 41-51, wherein a linear ester concentration is in a range of from about 0 wt% to about 70 wt% of the solvent.

Aspect 53 provides the energy storage device of Aspect 52, wherein the linear ester concentration is in a range of from about 5 wt% to about 50 wt% of the solvent.

Aspect 54 provides the energy storage device of Aspect 53, wherein the linear ester concentration is in a range of from about 8 wt% to about 30 wt% of the solvent.

Aspect 55 provides the energy storage device of any of Aspects 41-54, wherein a cyclic organic carbonate concentration ranges from about 0 wt% to about 40 wt% of the solvent.

Aspect 56 provides the energy storage device of Aspect 55, wherein the cyclic organic carbonate concentration ranges from about 5 wt% to about 25 wt% of the solvent.

Aspect 57 provides the energy storage device of any of Aspects 41-56, wherein a linear organic carbonate concentration ranges from 0 wt% to about 95 wt% of the solvent.

Aspect 58 provides the energy storage device of Aspect 57, wherein the linear organic carbonate concentration ranges from about 5 wt% to about 60 wt% of the solvent.

Aspect 59 provides the energy storage device of any of Aspects 41-58, wherein an additive component concentration ranges from about 0.01 wt% to about 5 wt% of the electrolyte solution.

Aspect 60 provides the energy storage device of Aspect 59, wherein the additive component concentration ranges from about 0.5 wt% to about 2 wt% of the electrolyte solution.

Aspect 61 provides the energy storage device of any of Aspects 41-60, wherein a total alkali salt concentration is in a range of from about 0.5m to about 1.8m.

Aspect 62 provides the energy storage device of Aspect 61, wherein the total alkali salt concentration is in a range of from 0.8m to about 1.4m.

Aspect 63 provides the energy storage device of any of Aspects 41-62 wherein the solvent comprises:
methyl acetate;
ethylene carbonate; and
dimethyl carbonate.

Aspect 64 provides the energy storage device of any of Aspects 41-63, wherein at least one of:
the linear ester is selected from a group comprising methyl acetate, ethyl acetate, and methyl propionate;
the cyclic organic carbonate is selected from a group comprising ethylene carbonate and propylene carbonate, fluoroethylene carbonate, di-fluoroethylene carbonate, and vinylene carbonate; and
the linear organic carbonate is selected from a group comprising dimethyl carbonate, methyl ethyl carbonate, and diethyl carbonate.

Aspect 65 provides the energy storage device of any of Aspects 41-64, comprising a mixture of Formulas I and II.

Aspect 66 provides the energy storage device of any of Aspects 41-65, wherein a molar ratio of the mixture of Formula I to Formula II ranges from about 5:1 to about 1:5.

Aspect 67 provides the energy storage device of any of Aspects 41-66, wherein a molar ratio of the mixture of Formula I to Formula II ranges from about 3:1 to about 1:3.

Aspect 68 provides the energy storage device of any of Aspects 41-67, wherein the cathode comprises sodium iron oxide (NaFeO₂); sodium cobalt oxide (NaCoO₂); sodium vanadium phosphate (Na₃V₂(PO₄)₃); sodium iron phosphate (NaFePO₄); or sodium manganese oxide (NaMnO₂).

Aspect 69 provides the energy storage device of Aspect 41-68, wherein an anode comprises graphite; hard carbon; sodium titanate, titanium dioxide, iron oxide, manganese oxide, a sodium and tin alloy, a lead and sodium alloy, or an antimony and sodium alloy.

Aspect 70 provides the energy storage device of any of Aspects 41-69, wherein the separator comprises a material selected from a group consisting of polyethylene (PE), polypropylene (PP), polyethylene-polypropylene multi-layer (PP/PE/PP), polyvinylidene fluoride (PVDF), anodized alumina (AAO), polyethylene oxide (PEO), polyvinyl alcohol (PVA), β"-alumina, Na₃Zr₂Si₂PO₁₂ (NASICON), and zeolite A.

Aspect 71 provides the energy storage device of any of Aspects 41-70, having an operating temperature of between about -40 to about 90°C.

Aspect 72 provides the energy storage device of Aspect 71, wherein the operating temperature is between about -30 to about 75°C.

Aspect 73 provides the energy storage device of any of Aspects 41-72 for use in portable applications, vehicles, domestic buildings, commercial building, or grid energy storage.

Aspect 74 provides a vehicle comprising the energy storage device of any of Aspects 41-73.

Aspect 75 provides the vehicle of Aspect 74, wherein the vehicle is a car, passenger vehicle, truck, bus, shuttle, motorcycle, scooter, utility vehicle, construction vehicle, mining vehicle, agricultural vehicle, aircraft, plane, helicopter, vertical takeoff and landing (eVTOL) vehicle, drone, unmanned aerial vehicle (UAV), airship, space vehicle, boat, ship, ferry, personal watercraft, submersible, marine vessel, port vehicle, train, tram, light rail vehicle, or subway car.

Aspect 76 provides a method of making the energy storage device of any of Aspects 41-75, the method comprising:
placing the separator between the cathode and the anode;
inserting the cathode, the anode, and the separator into a housing;
adding an electrolyte solution to the housing; and
contacting the electrolyte solution with the cathode and the anode.

Throughout this document, values expressed in a range format should be interpreted in a flexible manner to include not only the numerical values explicitly recited as the limits of the range, but also to include all the individual numerical values or sub-ranges encompassed within that range as if each numerical value and sub-range is explicitly recited. For example, a range of "about 0.1% to about 5%" or "about 0.1% to 5%" should be interpreted to include not just about 0.1% to about 5%, but also the individual values (e.g., 1%, 2%, 3%, and 4%) and the sub-ranges (e.g., 0.1% to 0.5%, 1.1% to 2.2%, 3.3% to 4.4%) within the indicated range. The statement "about X to Y" has the same meaning as "about X to about Y," unless indicated otherwise. Likewise, the statement "about X, Y, or about Z" has the same meaning as "about X, about Y, or about Z," unless indicated otherwise.

In this document, the terms "a," "an," or "the" are used to include one or more than one unless the context clearly dictates otherwise. The term "or" is used to refer to a nonexclusive "or" unless otherwise indicated. The statement "at least one of A and B" or "at least one of A or B" has the same meaning as "A, B, or A and B." In addition, it is to be understood that the phraseology or terminology employed herein, and not otherwise defined, is for the purpose of description only and not of limitation. Any use of section headings is intended to aid reading of the document and is not to be interpreted as limiting; information that is relevant to a section heading may occur within or outside of that particular section.

In the methods described herein, the acts can be carried out in any order without departing from the principles of the disclosure, except when a temporal or operational sequence is explicitly recited. Furthermore, specified acts can be carried out concurrently unless explicit claim language recites that they be carried out separately. For example, a claimed act of doing X and a claimed act of doing Y can be conducted simultaneously within a single operation, and the resulting process will fall within the literal scope of the claimed process.

The term "about" as used herein can allow for a degree of variability in a value or range, for example, within 10%, within 5%, or within 1% of a stated value or of a stated limit of a range, and includes the exact stated value or range. The term "substantially" as used herein refers to a majority of, or mostly, as in at least about 50%, 60%, 70%, 80%, 90%, 95%, 96%, 97%, 98%, 99%, 99.5%, 99.9%, 99.99%, or at least about 99.999% or more, or 100%. The term "substantially free of" as used herein can mean having none or having a trivial amount of, such that the amount of material present does not affect the material properties of the composition including the material, such that about 0 wt% to about 5 wt% of the composition is the material, or about 0 wt% to about 1 wt%, or about 5 wt% or less, or less than or equal to about 4.5 wt%, 4, 3.5, 3, 2.5, 2, 1.5, 1, 0.9, 0.8, 0.7, 0.6, 0.5, 0.4, 0.3, 0.2, 0.1, 0.01, or about 0.001 wt% or less, or about 0 wt%.

The term "organic group" as used herein refers to any carbon-containing functional group. Examples can include an oxygen-containing group such as an alkoxy group, aryloxy group, aralkyloxy group, oxo(carbonyl) group; a carboxyl group including a carboxylic acid, carboxylate, and a carboxylate ester; a sulfur-containing group such as an alkyl and aryl sulfide group; and other heteroatom-containing groups. Non-limiting examples of organic groups include OR, OOR, OC(O)N(R)₂, CN, CF₃, OCF₃, R, C(O), methylenedioxy, ethylenedioxy, N(R)₂, SR, SOR, SO₂R, SO₂N(R)₂, SO₃R, C(O)R, C(O)C(O)R, C(O)CH₂C(O)R, C(S)R, C(O)OR, OC(O)R, C(O)N(R)₂, OC(O)N(R)₂, C(S)N(R)₂, (CH₂)₀₋₂N(R)C(O)R, (CH₂)₀₋₂N(R)N(R)₂, N(R)N(R)C(O)R, N(R)N(R)C(O)OR, N(R)N(R)CON(R)₂, N(R)SO₂R, N(R)SO₂N(R)₂, N(R)C(O)OR, N(R)C(O)R, N(R)C(S)R, N(R)C(O)N(R)₂, N(R)C(S)N(R)₂, N(COR)COR, N(OR)R, C(=NH)N(R)₂, C(O)N(OR)R, C(=NOR)R, and substituted or unsubstituted (C₁-C₁₀₀)hydrocarbyl, wherein R can be hydrogen (in examples that include other carbon atoms) or a carbon-based moiety, and wherein the carbon-based moiety can be substituted or unsubstituted.

The term "substituted" as used herein in conjunction with a molecule or an organic group as defined herein refers to the state in which one or more hydrogen atoms contained therein are replaced by one or more non-hydrogen atoms. The term "functional group" or "substituent" as used herein refers to a group that can be or is substituted onto a molecule or onto an organic group. Examples of substituents or functional groups include, but are not limited to, a halogen (e.g., F, Cl, Br, and I); an oxygen atom in groups such as hydroxy groups, alkoxy groups, aryloxy groups, aralkyloxy groups, oxo(carbonyl) groups, carboxyl groups including carboxylic acids, carboxylates, and carboxylate esters; a sulfur atom in groups such as thiol groups, alkyl and aryl sulfide groups, sulfoxide groups, sulfone groups, sulfonyl groups, and sulfonamide groups; a nitrogen atom in groups such as amines, hydroxyamines, nitriles, nitro groups, N-oxides, hydrazides, azides, and enamines; and other heteroatoms in various other groups. Non-limiting examples of substituents that can be bonded to a substituted carbon (or other) atom include F, Cl, Br, I, OR, OC(O)N(R)₂, CN, NO, NO₂, ONO₂, azido, CF₃, OCF₃, R, O (oxo), S (thiono), C(O), S(O), methylenedioxy, ethylenedioxy, N(R)₂, SR, SOR, SO₂R, SO₂N(R)₂, SO₃R, C(O)R, C(O)C(O)R, C(O)CH₂C(O)R, C(S)R, C(O)OR, OC(O)R, C(O)N(R)₂, OC(O)N(R)₂, C(S)N(R)₂, (CH₂)₀₋₂N(R)C(O)R, (CH₂)₀₋₂N(R)N(R)₂, N(R)N(R)C(O)R, N(R)N(R)C(O)OR, N(R)N(R)CON(R)₂, N(R)SO₂R, N(R)SO₂N(R)₂, N(R)C(O)OR, N(R)C(O)R, N(R)C(S)R, N(R)C(O)N(R)₂, N(R)C(S)N(R)₂, N(COR)COR, N(OR)R, C(=NH)N(R)₂, C(O)N(OR)R, and C(=NOR)R, wherein R can be hydrogen or a carbon-based moiety; for example, R can be hydrogen, (C₁-C₁₀₀)hydrocarbyl, alkyl, acyl, cycloalkyl, aryl, aralkyl, heterocyclyl, heteroaryl, or heteroarylalkyl; or wherein two R groups bonded to a nitrogen atom or to adjacent nitrogen atoms can together with the nitrogen atom or atoms form a heterocyclyl.

The term "alkyl" as used herein refers to straight chain and branched alkyl groups and cycloalkyl groups having from 1 to 40 carbon atoms, 1 to about 20 carbon atoms, 1 to 12 carbon atoms, or, in some aspects, from 1 to 8 carbon atoms. Examples of straight chain alkyl groups include those with from 1 to 8 carbon atoms such as methyl, ethyl, n-propyl, n-butyl, n-pentyl, n-hexyl, n-heptyl, and n-octyl groups. Examples of branched alkyl groups include, but are not limited to, isopropyl, iso-butyl, sec-butyl, t-butyl, neopentyl, isopentyl, and 2,2-dimethylpropyl groups. As used herein, the term "alkyl" encompasses n-alkyl, isoalkyl, and anteisoalkyl groups as well as other branched chain forms of alkyl. Representative substituted alkyl groups can be substituted one or more times with any of the groups listed herein, for example, amino, hydroxy, cyano, carboxy, nitro, thio, alkoxy, and halogen groups.

The term "alkenyl" as used herein refers to straight and branched chain and cyclic alkyl groups as defined herein, except that at least one double bond exists between two carbon atoms. Thus, alkenyl groups have from 2 to 40 carbon atoms, or 2 to about 20 carbon atoms, or 2 to 12 carbon atoms or, in some aspects, from 2 to 8 carbon atoms. Examples include, but are not limited to vinyl, - CH=CH(CH₃), -CH=C(CH₃)₂, -C(CH₃)=CH₂, -C(CH₃)=CH(CH₃), - C(CH₂CH₃)=CH₂, cyclohexenyl, cyclopentenyl, cyclohexadienyl, butadienyl, pentadienyl, and hexadienyl among others.

The term "alkynyl" as used herein refers to straight and branched chain alkyl groups, except that at least one triple bond exists between two carbon atoms. Thus, alkynyl groups have from 2 to 40 carbon atoms, 2 to about 20 carbon atoms, or from 2 to 12 carbon atoms, or, in some aspects, from 2 to 8 carbon atoms. Examples include, but are not limited to -C≡CH, -C≡C(CH₃), - C≡C(CH₂CH₃), -CH₂C≡CH, -CH₂C≡C(CH₃), and -CH₂C≡C(CH₂CH₃) among others.

The term "acyl" as used herein refers to a group containing a carbonyl moiety wherein the group is bonded via the carbonyl carbon atom. The carbonyl carbon atom is bonded to a hydrogen forming a "formyl" group or is bonded to another carbon atom, which can be part of an alkyl, aryl, aralkyl cycloalkyl, cycloalkylalkyl, heterocyclyl, heterocyclylalkyl, heteroaryl, heteroarylalkyl group or the like. An acyl group can include 0 to about 12, 0 to about 20, or 0 to about 40 additional carbon atoms bonded to the carbonyl group. An acyl group can include double or triple bonds within the meaning herein. An acryloyl group is an example of an acyl group. An acyl group can also include heteroatoms within the meaning herein. A nicotinoyl group (pyridyl-3-carbonyl) is an example of an acyl group within the meaning herein. Other examples include acetyl, benzoyl, phenylacetyl, pyridylacetyl, cinnamoyl, and acryloyl groups and the like. When the group containing the carbon atom that is bonded to the carbonyl carbon atom contains a halogen, the group is termed a "haloacyl" group. An example is a trifluoroacetyl group.

The term "cycloalkyl" as used herein refers to cyclic alkyl groups such as, but not limited to, cyclopropyl, cyclobutyl, cyclopentyl, cyclohexyl, cycloheptyl, and cyclooctyl groups. In some aspects, the cycloalkyl group can have from 3 to about 8-12 ring members, whereas in other aspects the number of ring carbon atoms range from 3 to 4, 5, 6, or 7. Cycloalkyl groups further include polycyclic cycloalkyl groups such as, but not limited to, norbornyl, adamantyl, bornyl, camphenyl, isocamphenyl, and carenyl groups, and fused rings such as, but not limited to, decalinyl, and the like. Cycloalkyl groups also include rings that are substituted with straight or branched chain alkyl groups as defined herein. Representative substituted cycloalkyl groups can be mono-substituted or substituted more than once, such as, but not limited to, 2,2-, 2,3-, 2,4- 2,5- or 2,6-disubstituted cyclohexyl groups or mono-, di- or tri-substituted norbornyl or cycloheptyl groups, which can be substituted with, for example, amino, hydroxy, cyano, carboxy, nitro, thio, alkoxy, and halogen groups. The term "cycloalkenyl" alone or in combination denotes a cyclic alkenyl group.

The term "aryl" as used herein refers to cyclic aromatic hydrocarbon groups that do not contain heteroatoms in the ring. Thus aryl groups include, but are not limited to, phenyl, azulenyl, heptalenyl, biphenyl, indacenyl, fluorenyl, phenanthrenyl, triphenylenyl, pyrenyl, naphthacenyl, chrysenyl, biphenylenyl, anthracenyl, and naphthyl groups. In some aspects, aryl groups contain about 6 to about 14 carbons in the ring portions of the groups. Aryl groups can be unsubstituted or substituted, as defined herein. Representative substituted aryl groups can be mono-substituted or substituted more than once, such as, but not limited to, a phenyl group substituted at any one or more of 2-, 3-, 4-, 5-, or 6-positions of the phenyl ring, or a naphthyl group substituted at any one or more of 2-to 8-positions thereof.

The term "aralkyl" as used herein refers to alkyl groups as defined herein in which a hydrogen or carbon bond of an alkyl group is replaced with a bond to an aryl group as defined herein. Representative aralkyl groups include benzyl and phenylethyl groups and fused (cycloalkylaryl)alkyl groups such as 4-ethyl-indanyl. Aralkenyl groups are alkenyl groups as defined herein in which a hydrogen or carbon bond of an alkyl group is replaced with a bond to an aryl group as defined herein.

The term "heterocyclyl" as used herein refers to aromatic and nonaromatic ring compounds containing three or more ring members, of which one or more is a heteroatom such as, but not limited to, N, O, and S.

The term "heteroaryl" as used herein refers to aromatic ring compounds containing 5 or more ring members, of which one or more is a heteroatom such as, but not limited to, N, O, and S; for instance, heteroaryl rings can have 5 to about 8-12 ring members. A heteroaryl group is a variety of a heterocyclyl group that possesses an aromatic electronic structure.

The term "heterocyclylalkyl" as used herein refers to alkyl groups as defined herein in which a hydrogen or carbon bond of an alkyl group as defined herein is replaced with a bond to a heterocyclyl group as defined herein. Representative heterocyclyl alkyl groups include, but are not limited to, furan-2-yl methyl, furan-3-yl methyl, pyridine-3-yl methyl, tetrahydrofuran-2-yl ethyl, and indol-2-yl propyl.

The term "heteroarylalkyl" as used herein refers to alkyl groups as defined herein in which a hydrogen or carbon bond of an alkyl group is replaced with a bond to a heteroaryl group as defined herein.

The term "alkoxy" as used herein refers to an oxygen atom connected to an alkyl group, including a cycloalkyl group, as are defined herein. Examples of linear alkoxy groups include but are not limited to methoxy, ethoxy, propoxy, butoxy, pentyloxy, hexyloxy, and the like. Examples of branched alkoxy include but are not limited to isopropoxy, sec-butoxy, tert-butoxy, isopentyloxy, isohexyloxy, and the like. Examples of cyclic alkoxy include but are not limited to cyclopropyloxy, cyclobutyloxy, cyclopentyloxy, cyclohexyloxy, and the like. An alkoxy group can include about 1 to about 12, about 1 to about 20, or about 1 to about 40 carbon atoms bonded to the oxygen atom, and can further include double or triple bonds, and can also include heteroatoms. For example, an allyloxy group or a methoxyethoxy group is also an alkoxy group within the meaning herein, as is a methylenedioxy group in a context where two adjacent atoms of a structure are substituted therewith.

The term "amine" as used herein refers to primary, secondary, and tertiary amines having, e.g., the formula N(group)₃ wherein each group can independently be H or non-H, such as alkyl, aryl, and the like. Amines include but are not limited to R-NH₂, for example, alkylamines, arylamines, alkylarylamines; R₂NH wherein each R is independently selected, such as dialkylamines, diarylamines, aralkylamines, heterocyclylamines and the like; and R₃N wherein each R is independently selected, such as trialkylamines, dialkylarylamines, alkyldiarylamines, triarylamines, and the like. The term "amine" also includes ammonium ions as used herein.

The term "amino group" as used herein refers to a substituent of the form -NH₂, -NHR, -NR₂, -NR₃⁺, wherein each R is independently selected, and protonated forms of each, except for -NR₃⁺, which cannot be protonated. Accordingly, any compound substituted with an amino group can be viewed as an amine. An "amino group" within the meaning herein can be a primary, secondary, tertiary, or quaternary amino group. An "alkylamino" group includes a monoalkylamino, dialkylamino, and trialkylamino group.

The terms "halo," "halogen," or "halide" group, as used herein, by themselves or as part of another substituent, mean, unless otherwise stated, a fluorine, chlorine, bromine, or iodine atom.

The term "haloalkyl" group, as used herein, includes mono-halo alkyl groups, poly-halo alkyl groups wherein all halo atoms can be the same or different, and per-halo alkyl groups, wherein all hydrogen atoms are replaced by halogen atoms, such as fluoro. Examples of haloalkyl include trifluoromethyl, 1,1-dichloroethyl, 1,2-dichloroethyl, 1,3-dibromo-3,3-difluoropropyl, perfluorobutyl, and the like.

The term "monovalent" as used herein refers to a substituent connecting via a single bond to a substituted molecule. When a substituent is monovalent, such as, for example, F or Cl, it is bonded to the atom it is substituting by a single bond.

The term "hydrocarbon" or "hydrocarbyl" as used herein refers to a molecule or functional group that includes carbon and hydrogen atoms. The term can also refer to a molecule or functional group that normally includes both carbon and hydrogen atoms but wherein all the hydrogen atoms are substituted with other functional groups. The term "hydrocarbyl" refers to a functional group derived from a straight chain, branched, or cyclic hydrocarbon, and can be alkyl, alkenyl, alkynyl, aryl, cycloalkyl, acyl, or any combination thereof. Hydrocarbyl groups can be shown as (Cₐ-C_{b})hydrocarbyl, wherein a and b are integers and mean having any of a to b number of carbon atoms. For example, (C₁-C₄)hydrocarbyl means the hydrocarbyl group can be methyl (C₁), ethyl (C₂), propyl (C₃), or butyl (C₄), and (C₀-C_{b})hydrocarbyl means in certain aspects there is no hydrocarbyl group. A hydrocarbylene group is a diradical hydrocarbon, e.g., a hydrocarbon that is bonded at two locations.

The terms and expressions that have been employed are used as terms of description and not of limitation, but it is recognized that various modifications are possible within the scope of the aspects of the present disclosure. Thus, it should be understood that although the present disclosure has been specifically disclosed by specific aspects and optional features, modification and variation of the concepts herein disclosed may be resorted to by those of ordinary skill in the art, and that such modifications and variations are considered to be within the scope of aspects of the present disclosure.

## Claims

1. An additive component for a sodium ion battery, the additive component comprising a structure according to Formula I or Formula II, an enantiomer thereof, a diastereomer thereof, a *meso* compound thereof, a constitutional isomer thereof, or a mixture thereof: 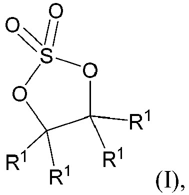 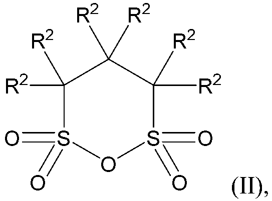 wherein at each occurrence R¹ and R² are independently selected from -H, a halogen, a substituted or an unsubstituted C₁-C₂₀ hydrocarbyl, or substituted or unsubstituted C₁-C₂₀ haloalkyl.

2. The additive component of claim 1, wherein the additive component comprises a structure according to Formula III, Formula IV, Formula V, an enantiomer thereof, a diastereomer thereof, a *meso* compound thereof, a constitutional isomer thereof, or a mixture thereof: 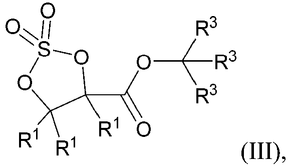 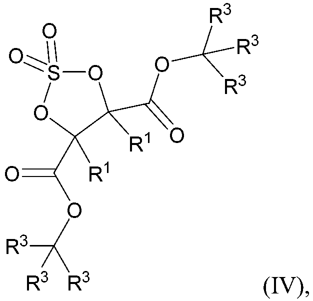 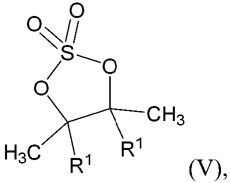 wherein at each occurrence R³ is independently selected from -H, a halogen, a substituted or an unsubstituted C₁-C₂₀ hydrocarbyl, or substituted or unsubstituted C₁-C₂₀ haloalkyl.

3. The additive component of claim 2, wherein at least one of R¹-R³ is -H.

4. The additive component of claim 2 or 3, wherein at least one of R¹-R³ is a halogen, and optionally wherein the halogen is -F.

5. The additive component of any of claims 2 to 4, wherein at least one of R¹-R³ is substituted or unsubstituted C₁-C₂₀ alkyl.

6. The additive component of any of claims 2 to 5, wherein at least one of R¹-R³ is substituted or unsubstituted C₁-C₂₀ aryl.

7. The additive component of any of claims 2 to 6, wherein at least one of R¹-R³ is substituted or unsubstituted C₁-C₂₀ haloalkyl, and optionally wherein at least one of R¹-R³ is substituted or unsubstituted C₁-C₂₀ fluoroalkyl.

8. The additive component of any preceding claim, wherein the additive component comprises a structure according to Formula VI, Formula VII, Formula VIII, Formula IX, or a mixture thereof:

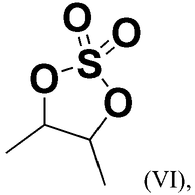

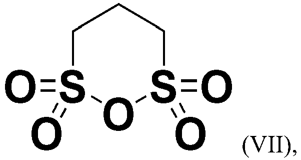

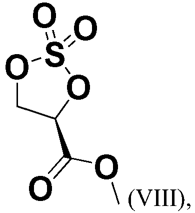

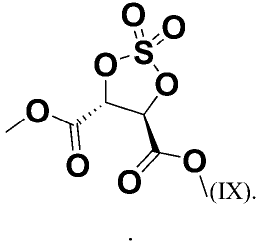

9. The additive component of any preceding claim, comprising a mixture of Formulas I and II in a molar ratio ranging from about 5:1 to about 1:5.

10. An electrolyte solution comprising:
a solvent comprising:
at least one of:
a linear ester;
a cyclic organic carbonate;
a linear organic carbonate;
a linear ether;
a cyclic ether;
a sulfite; and
a phosphate;
an alkali salt, and
an additive component comprising a structure according to Formula I or Formula II, an enantiomer thereof, a diastereomer thereof, a *meso* compound thereof, a constitutional isomer thereof, or a mixture thereof: 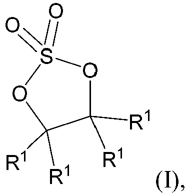 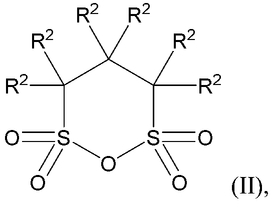
wherein at each occurrence R¹ and R² are independently selected from -H, a halogen, a substituted or an unsubstituted C₁-C₂₀ hydrocarbyl, or substituted or unsubstituted C₁-C₂₀ haloalkyl.

11. The electrolyte solution of claim 10, wherein the additive component comprises a structure according to Formula III, Formula IV, Formula V, an enantiomer thereof, a diastereomer thereof, a *meso* compound thereof, a constitutional isomer thereof, or a mixture thereof: 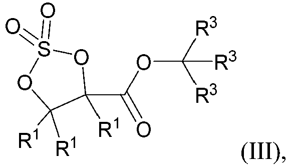 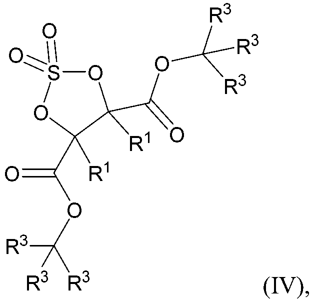 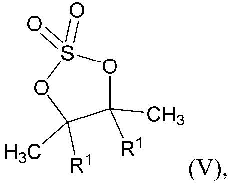 wherein at each occurrence R³ is independently selected from -H, a halogen, a substituted or an unsubstituted C₁-C₂₀ hydrocarbyl, or substituted or unsubstituted C₁-C₂₀ haloalkyl.

12. The electrolyte solution of claim 10 or 11, wherein the additive component comprises a structure according to Formula VI, Formula VII, Formula VIII, Formula IX, or a mixture thereof:

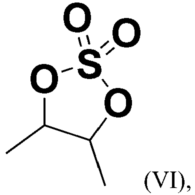

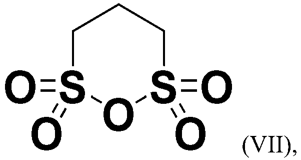

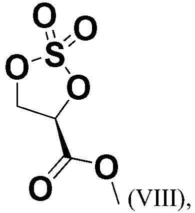

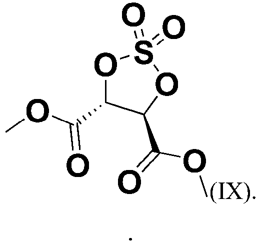

13. The electrolyte solution of any of claims 10 to 12, wherein the alkali salt comprises sodium hexafluorophosphate (NaPF₆), sodium bis(trifluoromethylsulfonyl)imide (NaTFSI), sodium bis(fluorosulfonyl)imide (NaFSI), sodium difluoro(oxalato)borate (NaDFOB), sodium bis(oxalato)borate (NaBOB), sodium tetrafluoroborate (NaBF4), or a mixture thereof, and/or
wherein the solvent comprises:
methyl acetate;
ethylene carbonate; and
dimethyl carbonate.

14. The electrolyte solution of any of claims 10 to 13, wherein a molar ratio of the mixture of Formula I to Formula II ranges from about 5:1 to about 1:5, or wherein a molar ratio of the mixture of Formula I to Formula II ranges from about 3:1 to about 1:3.

15. An energy storage device comprising:
a cathode;
an anode;
a separator between the cathode and the anode;
an electrolyte solution comprising:
a solvent comprising:
at least one of:
a linear ester;
a cyclic organic carbonate;
a linear organic carbonate;
a linear ether;
a cyclic ether;
a sulfite; and
a phosphate; and
a sodium salt, and
an additive component comprising a structure according to Formula I or Formula II, an enantiomer thereof, a diastereomer thereof, a *meso* compound thereof, a constitutional isomer thereof, or a mixture thereof: 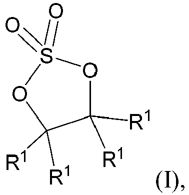 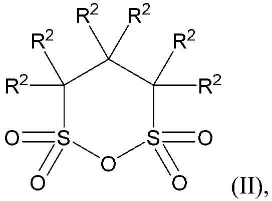
wherein at each occurrence R¹ and R² are independently selected from -H, a halogen, a substituted or an unsubstituted C₁-C₂₀ hydrocarbyl, or substituted or unsubstituted C₁-C₂₀ haloalkyl.
